# EUROPEAN PATENT APPLICATION

(11) **EP 3 951 689 A1**
(43) Date of publication of application: **09.02.2022**
(21) Application number: 20783480.5
(22) Date of filing: 19.02.2020
(51) Int. Cl.: G06Q 30/02

(54) **INFORMATION PROCESSING DEVICE, ASSISTANCE SYSTEM, AND CONTROL METHOD**

(30) Priority: 29.03.2019 JP 2019065523
(71) Applicant: Sony Group Corporation, Tokyo 108-0075 (JP)
(72) Inventor: HISANAGA, Kenji, Tokyo 108-0075 (JP); OTSUKA, Masahiro, Tokyo 108-0075 (JP); SETA, Kenichi, Tokyo 108-0075 (JP); HORIKOSHI, Akiko, Tokyo 108-0075 (JP)
(74) Representative: 2SPL Patentanwälte PartG mbB
(86) International application number: PCT/JP2020/006439
(87) International publication number: WO 2020/202859

(57) **Abstract**

An information processing apparatus (200) includes a storage unit (240) that stores therein provision information (D1) including a provision condition for advertising for a product in a content, and a control unit (250) that estimates purchase intent on the product on the basis of a reaction of a user to the advertising for the product using the content if the provision condition indicated by the provision information (D1) is met. The control unit (250) associates intent information (D2), which indicates that it is estimated that the user has the purchase intent on the product, with the provision information (D1).

## Description

### Field

The present disclosure relates to an information processing apparatus, a support system, and a control method.

### Background

It is known that producers perform sales promotion by advertising produced products. Patent Literature 1 discloses a mobile communication device that causes a display means to display data for performing a sales process on a product related to a commercial message for which start of broadcasting is detected, and supports purchase of the product if the data is selected.

### Citation List

### Patent Literature

Patent Literature 1: JP 2011-71581 A

### Summary

### Technical Problem

In the conventional technology as described above, it is difficult to determine whether a user has purchase intent on the product unless the user who refers to the commercial message selects the data for performing the sales process. Further, in recent years, various modes are used to advertise products, and there is a demand to recognize purchase intent of users associated with advertising.

To cope with this, in the present disclosure, an information processing apparatus, a support system, and a control method that make it possible to recognize a relationship between advertising for a product and purchase intent of a user are provided.

### Solution to Problem

To solve the problems described above, an information processing apparatus includes: a storage unit that stores therein provision information including a provision condition for advertising for a product in a content; and a control unit that estimates purchase intent on the product on the basis of a reaction of a user to the advertising for the product using the content if the provision condition indicated by the provision information is met, wherein the control unit associates intent information with the provision information, the intent information indicating that it is estimated that the user has purchase intent on the product.

Moreover, a support system includes: a first apparatus that provides provision information including a provision condition for a content of advertising for a product; and an information processing apparatus, wherein the information processing apparatus includes a storage unit that stores therein the provision information provided by the first apparatus; and a control unit that estimates purchase intent on the product on the basis of a reaction of the user to the advertising for the product using the content if the provision condition indicated by the provision information is met, and the control unit associates intent information with the provision information, the intent information indicating that it is estimated that the user has the purchase intent on the product.

Moreover, a control method implemented by an information processing apparatus including a storage unit that stores therein provision information including a provision condition for advertising for a product in a content is provided that includes: estimating purchase intent on the product on the basis of a reaction of a user to the advertising for the product using the content if the provision condition indicated by the provision information is met; and associating intent information with the provision information, the intent information indicating that it is estimated that the user has the purchase intent on the product.

### Brief Description of Drawings

FIG. 1 is a diagram illustrating an example of a cycle of advertising for a product according to the first embodiment.
FIG. 2 is a diagram for explaining an example of a support system according to a first embodiment.
FIG. 3 is a diagram illustrating configuration examples of an information processing apparatus and an agent device according to the first embodiment.
FIG. 4 is a diagram illustrating an example of provision information according to the first embodiment.
FIG. 5 is a diagram illustrating an example of content information associated with the provision information in FIG. 4.
FIG. 6 is a diagram illustrating an example of intent information according to the first embodiment.
FIG. 7 is a flowchart illustrating an example of the flow of a process performed by the information processing apparatus according to the first embodiment.
FIG. 8 is a diagram illustrating a configuration example of a first apparatus according to the first embodiment.
FIG. 9 is a flowchart illustrating an example of the flow of a process performed by the first apparatus according to the first embodiment.
FIG. 10 is a diagram for explaining an example of a support system according to a second embodiment.
FIG. 11 is a diagram illustrating a configuration example of an information processing apparatus according to the second embodiment.
FIG. 12 is a diagram illustrating a configuration example of a second apparatus according to the second embodiment.
FIG. 13 is a sequence diagram illustrating an example of operation performed by each of apparatuses in the support system according to the second embodiment.
FIG. 14 is a diagram illustrating an example of support information according to the second embodiment.
FIG. 15 is a diagram illustrating another example of the support information according to the second embodiment.
FIG. 16 is a diagram illustrating a configuration example of an information processing apparatus according to a third embodiment.
FIG. 17 is a hardware configuration diagram illustrating an example of a computer that implements functions of the information processing apparatus.

### Description of Embodiments

Embodiments of the present disclosure will be described in detail below based on the drawings. In each of the embodiments described below, the same components are denoted by the same reference symbols, and repeated explanation will be omitted.

### First Embodiment

### Overview of cycle of advertising according to first embodiment

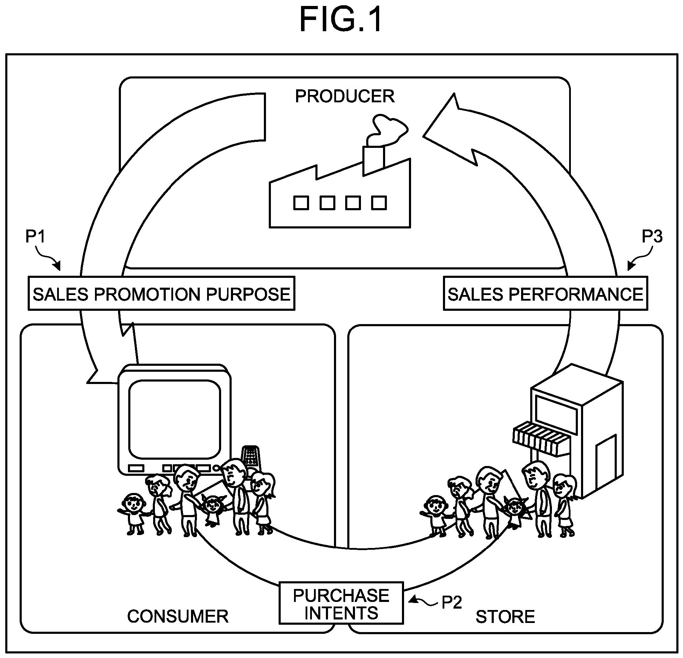

FIG. 1 is a diagram illustrating an example of a cycle of advertising for a product according to the first embodiment. As illustrated in FIG. 1, the cycle of advertising for a product includes a process P1 of planning advertising by a producer, a process P2 of providing advertising to consumers, and a process P3 of collecting sales performance of the product. Meanwhile, the cycle of advertising illustrated in FIG. 1 is one example, and may be appropriately changed depending on the media used for advertising, a sales channel, or the like.

The process P1 includes, for example, a process of planning, by a producer who produces a product, a sales promotion purpose (advertising) and requesting the media, such as a broadcaster or a video on demand (VOD) service, to perform advertising. The process P2 includes a process of causing the media to advertise the product and causing a consumer who has referred to the advertising to have purchase intent. The process P3 includes a process of providing the producer with sales performance of the product that has been sold by a sales channel. The process P1 further includes a process of evaluating an advertising effect based on the sales performance.

For example, in the cycle of advertising, the producer may analyze data on a connection between the advertising effect and the sales performance in an associated manner. However, it is difficult to analyze how the purchase intent of the consumer is affected by the advertising based on a relationship between the advertising and the sales performance. Further, the producer demands to use the advertising for the product to improve the sales performance. In the present embodiment, an information processing apparatus and the like that make it possible to recognize a relationship between advertising for a product and purchase intent of a user are provided.

### Overview of support system according to first embodiment

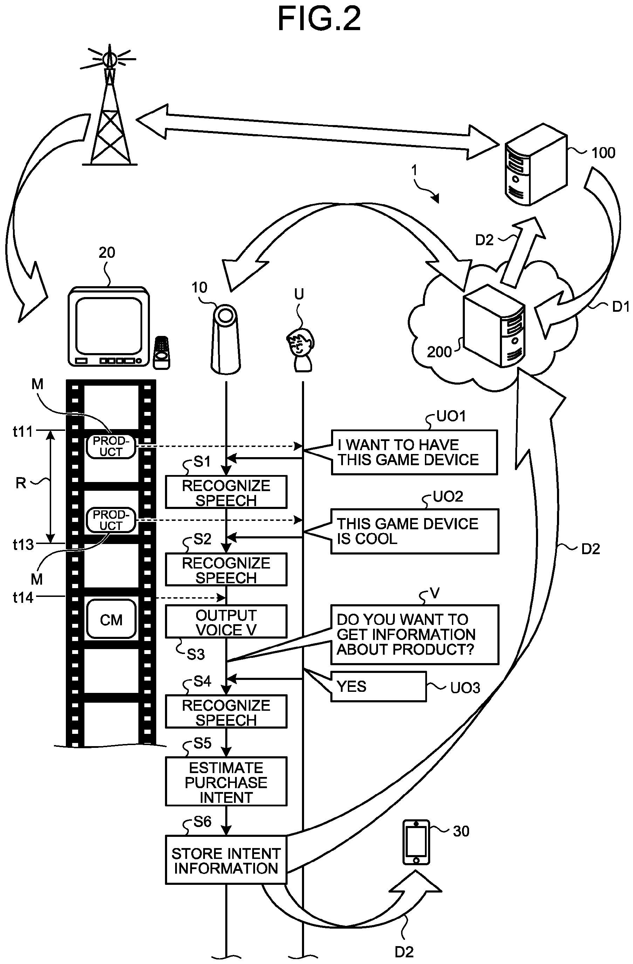

FIG. 2 is a diagram for explaining an example of a support system according to the first embodiment. As illustrated in FIG. 2, a support system 1 includes a first apparatus 100 and an information processing apparatus 200. The first apparatus 100 and the information processing apparatus 200 are configured such that they can communicate with each other via a network or directly without the network, for example. The support system 1 may include a plurality of information processing apparatuses 200. A user U illustrated in FIG. 2 is one example of a consumer who is viewing a content reception apparatus 20.

The first apparatus 100 is, for example, a computer that is used by a producer, an advertising company that is requested by the producer to perform product advertising, or the like. The first apparatus 100 has a function to manage a content related to the product advertising requested to the media. Examples of the content include a television broadcast program, a program for a video on demand service, and a disk medium. Examples of the content include a commercial message (CM) for the product, a program featured with the product, and a program in which the product is used as a property. Examples of the product include goods, music download data, and a product for a music streaming service. The first apparatus 100 has a function to manage a content of advertising for the product and a schedule of the content.

The first apparatus 100 has a function to provide provision information D1 including a provision condition for advertising for a product in a content to the information processing apparatus 200. The provision information D1 includes, for example, metadata or the like indicating details of the advertising for the product. The provision information D1 includes information on a timing at which a sales promotion action is conducted while the media is being viewed. The provision information D1 is information that can be prepared by the produced or the like who performs the sales promotion action. The provision condition indicates, for example, a condition under which a consumer is able to refer to the advertising for the product. The provision condition includes, for example, a service medium that performs the advertising for the product, a schedule, a reference method, and the like. The provision information D1 may be prepared and provided by the first apparatus 100 of the producer, the media, or the like.

The user U uses an agent device 10, the content reception apparatus 20, a mobile electronic device 30, and the like, which are Internet of things (IoT) devices, at home. The IoT device is able to perform communication by wire, by radio, by near-field wireless communication, or the like. The IoT device is connected to other IoT devices, the Internet, the cloud, or the like, and able to exchange information. As the IoT device, for example, a washing machine, a drying machine, a drier, a microwave, a dishwasher, a refrigerator, an oven, a rice cooker, a cooking utensil, a gas appliance, a fire alarm, a thermostat, an air conditioner, a set top box, a video player, a video recorder, an audio equipment, a lighting equipment, a water heater, a hot water dispenser, an electric fan, an air cleaner, a security camera, a lock, a door-shutter open-close device, a sprinkler, a toilet, a thermometer, a scale, a blood pressure monitor, or the like may be used. The content reception apparatus 20 replays a received content and displays the content on the display apparatus. Examples of the content reception apparatus 20 include a television, a set top box connected to the display apparatus, a video player, a video recorder, a home electric appliance including a display apparatus, and a personal computer. Examples of the mobile electronic device 30 include a smartphone, a mobile phone, and a smart watch, and, the mobile electronic device 30 is carried by the user U.

Voice recognition, a response process using voice, and the like performed by the agent device 10 may be referred to as an agent function. The agent device 10 having the agent function may be, for example, a smart speaker, a smartphone, a tablet terminal, a game device, or the like. In this case, the smartphone and the tablet terminal execute a program (application) having the same functions as those of the agent device 10, and implement the agent function as described above. Further, the content reception apparatus 20 may have the same functions as those of the agent device 10.

In the embodiments, the agent device 10 performs information processing on collected voice. For example, the agent device 10 recognizes a speech made by the user U, and performs information processing on the speech. Meanwhile, the agent device 10 may include, for example, various sensors for acquiring various other kinds of information, in addition to collecting sound generated at home. For example, the agent device 10 may include, in addition to the microphone, a camera for acquiring an image in a space, an illuminance sensor for detecting illuminance, a gyro sensor for detecting a tilt, an infrared sensor for detecting an object, or the like. The agent device 10 recognizes a speech of the user U and performs information processing based on the speech of the user. For example, the agent device 10 is able to control other IoT devices in accordance with the speech of the user.

The information processing apparatus 200 is a computer that performs various kinds of information processing in cooperation with the agent device 10 of the user U. In the present embodiment, the information processing apparatus 200 is, for example, a cloud server that is able to communicate with the agent device 10. The information processing apparatus 200 has a function to control operation of the agent device 10. The information processing apparatus 200 has a function to estimate purchase intent of the user U on the basis of a reaction of the user U, where the reaction is detected by the agent device 10. The reaction of the user U includes, for example, a speech, a gesture, or the like of the user U who is able to refer to advertising. The information processing apparatus 200 has a function to manage the provision information D1 acquired from the first apparatus 100. The information processing apparatus 200 has a function to estimate the purchase intent of the user U who has referred to the advertising for the product, on the basis of the provision information D1. The information processing apparatus 200 has a function to provide an estimation result of the purchase intent of the user U to other electronic devices.

In a scene as illustrated in FIG. 2, it is assumed that a broadcasting program including a CM during a viewing period is adopted as the media. Further, the user U is viewing the content reception apparatus 20 while the agent device 10 is activated. The content reception apparatus 20 is receiving radio waves distributed by a broadcasting station or the like and replaying contents (video). The content reception apparatus 20 replays a content of advertising for the product M in an advertising range R from a time t11 to a time t13.

The user U views the product M that is included in the content replayed by the content reception apparatus 20 at the time t11, and makes a user speech UO1. The user speech UO1 indicates that, for example, "I want to have this game device". In other words, the user U is interested in the advertised product M. Meanwhile, the user speech UO1 may be, for example, a name, a classification, a feature, or the like of the product.

Upon collecting the user speech UO1, the agent device 10 transmits speech data indicating the collected user speech UO1 to the information processing apparatus 200. In this case, the agent device 10 may add data for identifying the user U to the speech data, and transmits the speech data with the added data to the information processing apparatus 200.

Upon receiving the speech data, the information processing apparatus 200 analyzes the speech data. For example, the information processing apparatus 200 performs an automatic speech recognition (ASR) process and a natural language understanding (NLU) process based on the user speech UO1, and recognizes the speech data (Step S1). In this case, the information processing apparatus 200 stores information indicating that the user U is interested in the product M, on the basis of a recognition result. Meanwhile, the speech data may be analyzed by, for example, the agent device 10.

The user U views the product M that is included in a content replayed by the content reception apparatus 20 at the time t13, and makes a user speech UO2. The user speech UO2 indicates that, for example, "this game device is cool". In other words, the user U is interested in the advertised product M.

Upon collecting the user speech UO2, the agent device 10 transmits speech data indicating the collected user speech UO2 to the information processing apparatus 200.

Upon receiving the speech data, the information processing apparatus 200 recognizes the speech data (Step S2). In this case, the information processing apparatus 200 stores information indicating that the user U probably purchases the product M, on the basis of a recognition result.

At a time t14, the content reception apparatus 20 replays a commercial message. Further, the information processing apparatus 200 causes the agent device 10 to output a voice V indicating a query to the user U who is viewing the content reception apparatus 20, at a timing at which the content reception apparatus 20 replays the commercial message (Step S3). In the present embodiment, the agent device 10 outputs a voice of "Do you want to get information about the product M?" to the user U.

The user U makes a user speech UO3 in response to the output of the voice V from the agent device 10. The user speech UO3 indicates, for example, "yes". In other words, the user U gives a positive answer to the query from the agent device 10.

Upon collecting the user speech UO3, the agent device 10 transmits speech data indicating the collected user speech UO3 to the information processing apparatus 200.

Upon receiving the speech data, the information processing apparatus 200 recognizes the speech data (Step S4). The information processing apparatus 200 estimates purchase intent of the user U on the basis of the recognition result (Step S5). In this case, because the information processing apparatus 200 has recognized the positive answer from the user U to the query, the information processing apparatus 200 stores therein intent information D2 indicating that it is estimated that the user U has the purchase intent on the product (Step S6). By storing the intent information D2 in association the provision information D1, the information processing apparatus 200 is able to associate a purchase will of the user U and the advertising for the product M that causes the purchase will. The intent information D2 includes, for example, information capable of identifying at least one of the product and the advertising. In the present embodiment, by storing the intent information D2 in the mobile electronic device 30 of the user U, the information processing apparatus 200 is able to convey information indicating that the purchase will on the product M exists, from the mobile electronic device 30 to an external electronic device. Further, the information processing apparatus 200 provides the intent information D2 to the first apparatus 100.

As described above, the information processing apparatus 200 according to the first embodiment stores, in a storage unit 240, the provision information D1 including the provision condition for the advertising for the product M in the content. If the provision condition indicated by the provision information D1 is met, the information processing apparatus 200 causes a control unit 250 to estimate the purchase intent on the product M on the basis of a reaction of the user to the advertising for the product M using the content. The information processing apparatus 200 causes the control unit 250 to associate the intent information D2 indicating that it is estimated that the user U has the purchase intent on the product with the provision information D1. Accordingly, if the provision condition for the advertising is met, the information processing apparatus 200 estimates the purchase intent on the product M that is an advertising target on the basis of the reaction of the user, so that it is possible to improve accuracy of an estimation result. The information processing apparatus 200 associates the intent information D2 with the provision information D1, and therefore makes it possible to trace a relationship between the advertising and the purchase intent. As a result, by making it possible to recognize the relationship between the advertising for the product M and the purchase intent of the user U, the information processing apparatus 200 is able to support the producers or the like to effectively advertise the product M.

Furthermore, if it is estimated that the user U has the purchase intent, the information processing apparatus 200 causes the control unit 250 to generate the intent information D2 capable of identifying the product M and the content of the advertising for the product M. Accordingly, the information processing apparatus 200 makes it possible to recognize, by the intent information D2, a relationship between the product M, for which it is estimated that the purchase intent exists, and the content of the advertising. As a result, by making it possible to recognize the relationship between the purchase intent of the user U and the content of the advertising on the basis of the intent information D2, the information processing apparatus 200 is able to allow the producer or the like to determine effectiveness of the content of the advertising for the product M.

### Configuration example of information processing apparatus according to first embodiment

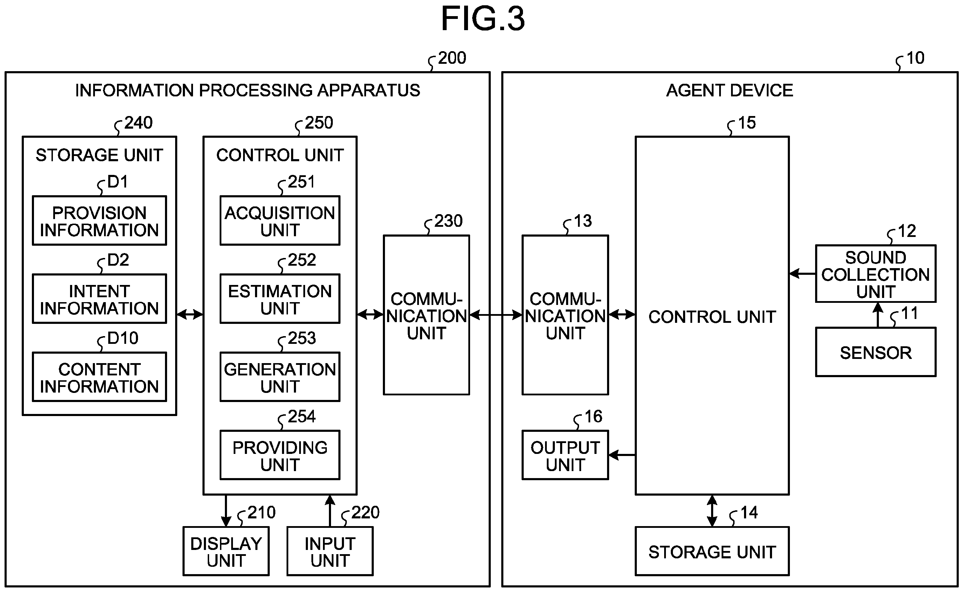

An example of a configuration of the information processing apparatus 200 according to the first embodiment will be described below. FIG. 3 is a diagram illustrating configuration examples of the information processing apparatus 200 and the agent device 10 according to the first embodiment.

### Configuration of agent device

As illustrated in FIG. 3, the agent device 10 includes a sound collection unit 12, a communication unit 13, a storage unit 14, a control unit 15, and an output unit 16. The control unit 15 is electrically connected to the sound collection unit 12, the communication unit 13, the storage unit 14, and the output unit 16.

The sound collection unit 12 controls a sensor 11 included in the agent device 10 and collects voice or the like. The sensor 11 is, for example, a microphone. Meanwhile, the sensor 11 may have a function to detect various kinds of information on motion of a user, such as orientation, inclination, or movement of the body of the user U or a moving speed. In other words, the sensor 11 may be a camera that captures an image of the user U or a surrounding environment or may be an infrared sensor that detects presence of the user U. The sensor 11 may detect situation information at the time the user U makes a speech. The sound collection unit 12 collects voice and outputs collected voice information to the control unit 15.

The communication unit 13 has a function to perform information communication with the information processing apparatus 200 via a network. Specifically, the communication unit 13 transmits the voice information collected by the sound collection unit 12 to the information processing apparatus 200. Further, the communication unit 13 outputs information received from the information processing apparatus 200 to the control unit 15.

The storage unit 14 stores therein various kinds of data and programs. For example, the storage unit 14 is a semiconductor memory device, such as a random access memory (RAM) or a flash memory, a hard disk, an optical disk, or the like. The storage unit 14 stores therein information received from the information processing apparatus 200. The storage unit 14 stores therein information capable of identifying the user U. Meanwhile, the storage unit 14 may be arranged in a cloud server or the like that is connected to the agent device 10 via a network.

The control unit 15 is, for example, a dedicated or general-purpose computer. When the sound collection unit 12 collects a speech, the control unit 15 performs control of transmitting speech data indicating the speech to the information processing apparatus 200. The control unit 15 performs a process that is requested by the information processing apparatus 200. For example, the control unit 15 causes the output unit 16 to output voice.

The output unit 16 includes a speaker, a display, or the like that has a voice output function. The output unit 16 outputs voice from the speaker to the user U or displays information on the display under the control of the control unit 15.

### Configuration of information processing apparatus

An example of the configuration of the information processing apparatus 200 will be described below. As illustrated in FIG. 3, the information processing apparatus 200 includes a display unit 210, an input unit 220, a communication unit 230, the storage unit 240, and the control unit 250. The control unit 250 is electrically connected to the display unit 210, the input unit 220, the communication unit 230, and the storage unit 240.

The display unit 210 has a function to display various kinds of information. The display unit 210 is controlled by the control unit 250. The display unit 210 includes, for example, a display device or the like that displays various kinds of information. Examples of the display device include a liquid crystal display (LCD) device, an organic light emitting diode (OLED) device, and a touch panel. Further, the display unit 210 according to the present embodiment may output information or the like by using a projection function.

The input unit 220 includes an input device that allows an operator the like to perform input and selection. The input device includes, for example, a keyboard, a mouse, or the like. The input unit 220 may include, for example, a microphone for collecting voice of an operator or the like. The input unit 220 outputs the input information to the control unit 250.

The communication unit 230 has a function to perform information communication with the agent device 10, an external electronic device, or the like via the network. Specifically, the communication unit 230 transmits information to a transmission destination that is designated by the control unit 250. The communication unit 230 outputs information that is received from an external electronic device to the control unit 250.

The storage unit 240 stores therein various kinds of data and programs. For example, the storage unit 240 is a semiconductor memory device, such as a RAM or a flash memory, a hard disk, an optical disk, or the like. The storage unit 240 stores therein, for example, various kinds of information, such as the provision information D1, the intent information D2, and content information D10. The provision information D1 includes information indicating the provision condition for the advertising for the product M in the content. The intent information D2 includes information indicating that it is estimated that the user U has the purchase intent on the product M. The content information D10 includes information on the content of the advertising for the product. The content information D10 is associated with the provision information D1. The storage unit 240 stores therein the provision information D1 and the content information D10 that are provided by the first apparatus 100 or the like. Meanwhile, examples of the provision information D1, the content information D10, and the intent information D2 will be described later.

The control unit 250 is, for example, a dedicated or general-purpose computer. The control unit 250 controls operation of the information processing apparatus 200. The control unit 250 includes an acquisition unit 251, an estimation unit 252, a generation unit 253, and a providing unit 254. Each of functions of the acquisition unit 251, the estimation unit 252, the generation unit 253, and the providing unit 254 is implemented by, for example, causing a central processing unit (CPU), a micro processing unit (MCU), or the like to execute a program stored in the control unit 250 by using a RAM or the like as a work area. Further, each of the processing units may be implemented by, for example, an integrated circuit, such as an application specific integrated circuit (ASIC) or a field programmable gate array (FPGA).

The acquisition unit 251 acquires, from the storage unit 240 or the like, the provision information D1 corresponding to a content viewed by the user U. Further, the acquisition unit 251 may have a function to acquire the provision information D1 from the first apparatus 100 via the communication unit 230. If the provision information D1 is acquired from outside, the acquisition unit 251 stores the provision information D1 in the storage unit 240. Meanwhile, the acquisition unit 251 may acquire the provision information D1 from a different electronic device, a distribution server, or the like. Examples of the different electronic device include an electronic device that is used by a broadcasting station, by a company that is requested by the producer to perform advertising, or the like.

The estimation unit 252 has a function to estimate the purchase intent on the product M on the basis of a reaction of the user U to the advertising for the product M using the content if the provision condition indicated by the provision information D1 is met. The purchase intent includes, for example, a will of the user U to purchase the product M, a probability that the user U may purchase the product M, and the like.

The estimation unit 252 has a function to cause the output unit 16 of the agent device 10 to output a message and estimate the purchase intent on the basis of a reaction of the user U to the message if the provision condition indicated by the provision information D1 is met. The message includes, for example, a message for confirming whether to provide information on the product M, a message for confirming whether to purchase the product M, or the like. The estimation unit 252 has a function to cause the output unit 16 to output the message at a timing at which a reference to the content is not disturbed. Examples of the non-disturbing timing include a timing at which a commercial message is replayed in the content, a timing at which the product is advertised, and a timing at which replay of the content is terminated. The estimation unit 252 has a function to estimate that the purchase intent exists if a reaction of the user as indicated by reaction information is detected. The reaction information includes, for example, a speech that is made by the user U in response to the message and information indicating a reaction, such as finger pointing, of the user who has referred to the product M.

In the present embodiment, a case will be described in which when a query about the purchase intent is issued to the user U and if an expected response is obtained during a pointed period, the estimation unit 252 estimates that the purchase intent on the product M exists. Meanwhile, the query may be issued by a combination of contents of a broadcasting program and a user interface (UI), depending on a broadcast markup language (BML) of terrestrial digital broadcasting or a standard of data broadcasting. In other words, the estimation unit 252 may cause the content reception apparatus 20 to issue the query via the communication unit 230, the agent device 10, and the like.

The generation unit 253 has a function to generate the intent information D2 indicating that the estimation unit 252 has estimated that the user U has the purchase intent on the product M. For example, the generation unit 253 generates the intent information D2 including information indicating that a will to purchase the product M exists, information for identifying the product M, information for identifying the advertising, and the like. For example, the generation unit 253 may include, in the intent information D2, information capable of identifying the user U who has the will to purchase the product M. The generation unit 253 stores the generated intent information D2 in the storage unit 240 in association with the provision information D1. The intent information D2 includes the information for identifying the product M and the information for identifying the advertising, so that it is possible to allow the producer, the advertising company, or the like to confirm the advertising that causes the user U to have the purchase will.

The providing unit 254 has a function to provide the intent information D2 generated by the generation unit 253 to an external apparatus. Examples of the external apparatus include the first apparatus 100 and an electronic device in a store that sells the product M. The providing unit 254 provides the intent information D2 associated with the provision information D1 to the external apparatus via the communication unit 230. The providing unit 254 provides the intent information D2 at a provision timing. Examples of the provision timing include a timing at which the generation unit 253 generates the intent information D2, and a set timing.

Thus, the functional configuration example of the information processing apparatus 200 according to the present embodiment has been described above. Meanwhile, the configuration as described above with reference to FIG. 3 is one example, and the functional configuration of the information processing apparatus 200 according to the present embodiment is not limited to this example. The functional configuration of the information processing apparatus 200 according to the present embodiment may be flexibly modified depending on specifications and operation. In the present embodiment, a case is described in which the information processing apparatus 200 is a server, but embodiments are not limited to this example. For example, the information processing apparatus 200 may be implemented by the agent device 10, the content reception apparatus 20, a home electric appliance, or an IoT device, such as a game device, of the user U.

### Configuration of provision information according to first embodiment

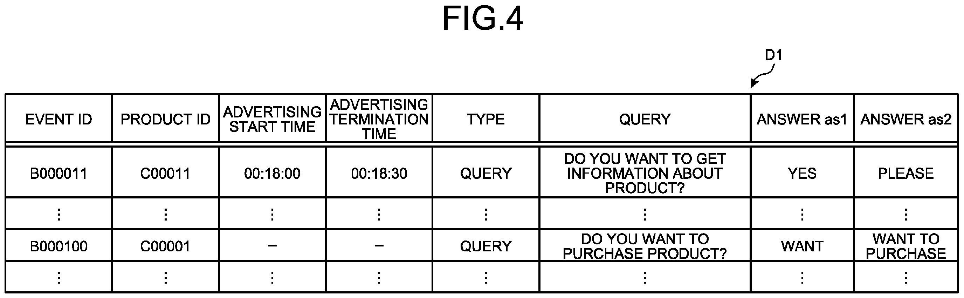

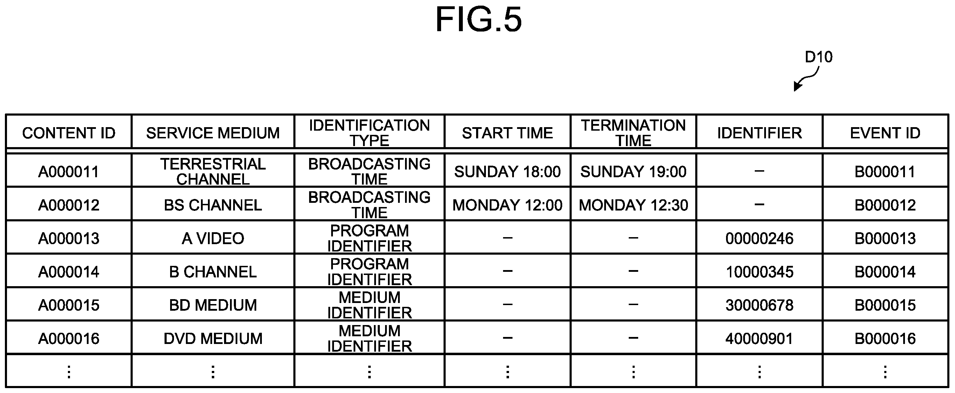

FIG. 4 is a diagram illustrating an example of the provision information D1 according to the first embodiment. FIG. 5 is a diagram illustrating an example of the content information D10 associated with the provision information in FIG. 4.

As illustrated in FIG. 4, the provision information D1 includes items of an event ID, a product ID, an advertising start time, an advertising termination time, a type, a query, an answer as1, and an answer as2. In the item of the event ID, an identifier of an event in which the product M is advertised is set. In the item of the product ID, an identifier of the product M is set. In the item of the advertising start time, a start time at which the advertising is started in the content is set. As the start time, for example, an elapsed time based on a start time of the content, date and time, or the like may be set. In the item of the advertising termination time, a termination time at which the advertising is terminated in the content is set. In the item of the type, a type of confirmation of the purchase intent by the information processing apparatus 200 is set. The type includes, for example, a type, such as a query or provision of a comment. In the item of the query, if the type is "query", speech information, information capable of identifying a speech, or the like is set. In the items of the answer as1 and the answer as2, example answers are set if example answers corresponding to contents in the item of the query are present.

In the example illustrated in FIG. 4, it is indicated that, with respect to the provision information D1 in which "B000011" is set in the event ID, "C00011" is set in the item of the product ID, "00:18:00" is set in the item of the advertising start time, and "00:18:30" is set in the item of the advertising termination time. Further, with respect to the provision information D1, the item of the type indicates "query", the item of the query indicates "Do you want to get information on product", the item of the answer as1 indicates "yes", and the item of the answer as2 indicates "please". In this case, the information processing apparatus 200 is able to recognize that, in the event identified by "B000011", advertising for a product identified by "C00011" is started after a lapse of 18 minutes since start of replay of contents and terminated after a lapse of 30 seconds. Furthermore, the information processing apparatus 200 causes the output unit 16 to output a voice of "Do you want to get information on product?" to the user U who is interested in the advertising. The information processing apparatus 200 is able to estimate that the user U has the purchase intent on the product M if the information processing apparatus 200 detects a user speech of "yes" or "please" through voice recognition.

As illustrated in FIG. 5, the content information D10 includes items of a content ID, a service medium, an identification type, a start time, a termination time, an identifier, and an event ID. In the item of the content ID, an identifier capable of identifying a content is set. In the item of the service medium, information capable of identifying a service medium that provides the content to the user U is set. The service medium includes, for example, a service, such as a terrestrial channel, a broadcasting satellite (BS) channel, a program or a channel of a video on demand service, or a disk medium. In the identification type, information capable of identifying the service medium is set. In the items of the start time and the termination time, a start time and a termination time are set for a content for which a broadcasting time is set. In the item of the identifier, information capable of identifying a content is set if a broadcasting time is not set for the content. In the event ID, the event ID in the associated provision information D1 is set. In the present embodiment, the provision information D1 and the content information D10 are associated with each other by the event ID.

Meanwhile, in the present embodiment, a case is explained in which the provision information D1 and the content information D10 are different kinds of information, but embodiments are not limited to this example. For example, the provision information D1 may include the content information D10.

### Configuration of intent information according to first embodiment

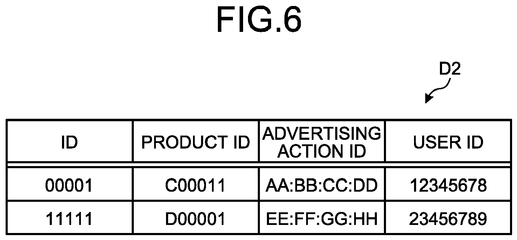

FIG. 6 is a diagram illustrating an example of the intent information D2 according to the first embodiment. As illustrated in FIG. 6, the intent information D2 includes items of an ID, a product ID, an advertising action ID, and a user ID. In the item of the ID, an identifier capable of identifying the purchase intent on the product M is set. In the item of the product ID, an identifier of the product M for which it is estimated that the purchase intent exists is set. In the item of the product ID, the product ID in the provision information D1 is set. In the advertising action ID, an identifier group is set in which the service medium, the content, and the advertising event are set. The advertising action ID is information that makes it possible to analyze an advertising action that causes the purchase intent to occur. In the user ID, an identifier capable of identifying the user U who has the purchase intent on the product M is set.

### Flow of process performed by information processing apparatus according to first embodiment

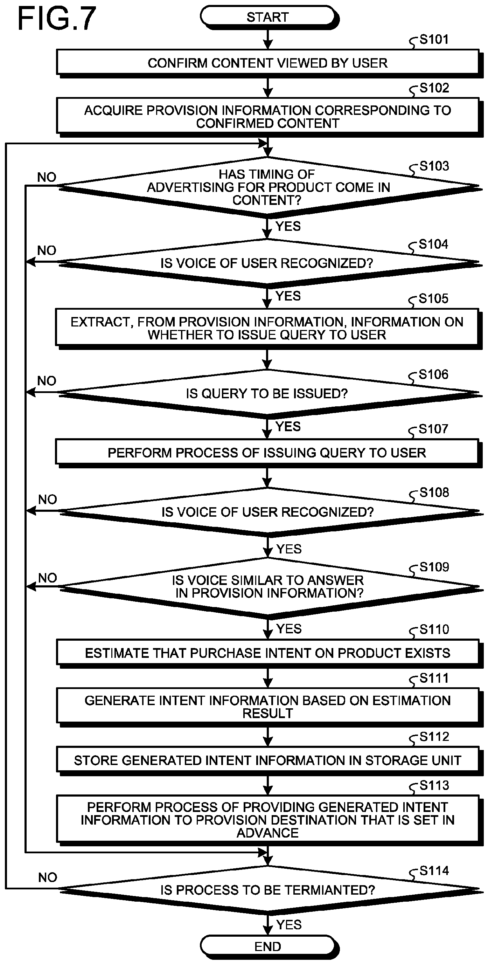

An example of the flow of a process performed by the information processing apparatus 200 according to the first embodiment will be described below with reference to FIG. 7. FIG. 7 is a flowchart illustrating the example of the flow of the process performed by the information processing apparatus 200 according to the first embodiment. The flow of the process illustrated in FIG. 7 is implemented by causing the control unit 250 of the information processing apparatus 200 to execute a program. Meanwhile, the flow of the process illustrated in FIG. 7 may be implemented by, for example, executing a script, a program, or the like that is acquired by the control unit 250 of the information processing apparatus 200.

As illustrated in FIG. 7, the control unit 250 of the information processing apparatus 200 confirms a content that is viewed by the user U (Step S101). For example, the control unit 250 acquires information on viewing performed by the user U from the agent device 10, the content reception apparatus 20, or the like via the communication unit 230, and confirms the content based on the information. Then, the control unit 250 acquires the provision information D1 corresponding to the confirmed content (Step S102). If the control unit 250 completes the process at Step S103, the process goes to Step S103.

The control unit 250 determines whether a timing of advertising for the product M has come in the content (Step S103). For example, the control unit 250 determines that the timing of advertising for the product M has come if an elapsed time since start of replay of the content is within a range of an advertising period on the basis of the provision information D1. If the control unit 250 determines that the timing of advertising for the product M has not come in the content (NO at Step S103), the process goes to Step S114 to be described later. Further, if the control unit 250 determines that the timing of advertising for the product M has come in the content (YES at Step S103), the process goes to Step S104.

The control unit 250 determines whether voice of the user U is recognized (Step S104). For example, the control unit 250 determines that the voice of the user U is recognized if voice information is received from the agent device 10 via the communication unit 230 within a certain period corresponding to the advertising. If the control unit 250 determines that the voice of the user U is not recognized (NO at Step S104), the process goes to Step S114 to be described later. Further, if the control unit 250 determines that the voice of the user U is recognized (YES at Step S104), the process goes to Step S105.

The control unit 250 extracts, from the provision information D1, information on whether to issue a query to the user U (Step S105). For example, if information is set in the item of the query in the provision information D1, the control unit 250 extracts the set information, and, if the information is not set, the control unit 250 does not extract the information. If the control unit 250 completes the process at Step S105, the process goes to Step S106.

The control unit 250 determines whether a query is to be issued (Step S106). For example, the control unit 250 determines that the query is to be issued if the information is extracted from the provision information D1 at Step S105, and determines that the query is not to be issued if the information is not extracted. If the control unit 250 determines that the query is not to be issued (NO at Step S106), the process goes to Step S114 to be described later. Further, if the control unit 250 determines that the query is to be issued (YES at Step S106), the process goes to Step S107.

The control unit 250 performs a process of issuing the query to the user U (Step S107). For example, the control unit 250 performs the process of issuing the query to cause the agent device 10 to output speech information that is set in the item of the query in the provision information D1 corresponding to the product M. As a result, the agent device 10 replays the speech information and causes the output unit 16 to output a query speech or the like. If the control unit 250 completes the process at Step S107, the process goes to Step S108.

The control unit 250 determines whether voice of the user U is recognized (Step S108). For example, the control unit 250 determines that the voice of the user U is recognized if voice information is received from the agent device 10 within a certain period since issuance of the query to the user U. If the control unit 250 determines that the voice of the user U is not recognized (NO at Step S108), the process goes to Step S114. Further, if the control unit 250 determines that the voice of the user U is recognized (YES at Step S108), the process goes to Step S109.

The control unit 250 determines whether the voice is similar to the answer in the provision information D1 (Step S109). For example, the control unit 250 performs an automatic speech recognition process, a natural language understanding process, or the like based on the voice information, and calculates a degree of match between the recognized voice and the answer in the provision information D1. If the degree of match is equal to or larger than a determination threshold, the control unit 250 determines that the voice is similar to the answer in the provision information D1. If the control unit 250 determines that the voice is not similar to the answer in the provision information D1 (NO at Step S109), the process goes to Step S114. Meanwhile, the control unit 250 may cause the process to proceed to Step S114 (to be described later) after storing information indicating that the purchase intent on the product M does not exist.

Further, if the control unit 250 determines that the voice is similar to the answer in the provision information D1 (YES at Step S109), the process goes to Step S110. The control unit 250 estimates that the purchase intent on the product M exists (Step S110). The control unit 250 generates the intent information D2 (Step S111). For example, the control unit 250 generates the intent information D2 associated with the provision information D1 on the basis of the estimation result, the provision information D1, the content information D10, and the like. The control unit 250 stores the generated intent information D2 in the storage unit 240 (Step S112). The control unit 250 performs a process of providing the generated intent information D2 to a provision destination that is set in advance (Step S113). For example, by performing the process, the control unit 250 transmits and stores, at the provision timing, the intent information D2 to an external apparatus that is set in advance, a storage device that is a storage destination of the external apparatus, or the like via the communication unit 230. If the control unit 250 completes the process at Step S113, the process goes to Step S114.

The control unit 250 determines whether the process is to be terminated (Step S114). For example, if replay of the content or viewing by the user is terminated, the control unit 250 determines that the process is to be terminated. If the control unit 250 determines that the process is not to be terminated (NO at Step S114), the process returns to Step S103 described above, and the flow of the process from Step S103 is repeated. Further, if the control unit 250 determines that the process is to be terminated (YES at Step S114), the flow of the process illustrated in FIG. 7 is terminated.

In the example of the flow of the process illustrated in FIG. 7, the control unit 250 of the information processing apparatus 200 functions as the acquisition unit 251 as described above by performing the process at Step S102. The control unit 250 functions as the estimation unit 252 as described above by performing the process from Step S103 to Step S110. The control unit 250 functions as the generation unit 253 as described above by performing the process at Step S111. The control unit 250 functions as the providing unit 254 as described above by performing the process at Step S113.

As described above, the information processing apparatus 200 according to the first embodiment stores, in the storage unit 240, the provision information D1 that includes a message indicating a query to the user U who refers to the advertising for the product M. If the provision condition indicated by the provision information is met, the control unit 250 of the information processing apparatus 200 causes the output unit 16 to output the message and estimates the purchase intent on the basis of a reaction of the user U to the message. With this configuration, the information processing apparatus 200 is able to issue the query to the user U in accordance with the advertising for the product M, and estimate the purchase intent on the basis of the reaction of the user U to the query. As a result, by issuing the query to the user U who has recognized the advertising, the information processing apparatus 200 is able to further improve estimation accuracy of existence of the purchase intent on the product M.

Furthermore, the information processing apparatus 200 stores, in the storage unit 240, the provision information D1 including the reaction information indicating the reaction of user U who has the purchase intent, where the reaction corresponds to the message of the query. If the reaction of the user U as indicated by the reaction information is detected, the control unit 250 of the information processing apparatus 200 estimates that the purchase intent exists. With this configuration, the information processing apparatus 200 is able to estimate the purchase intent by comparing the reaction of the user U to the message of the query and the reaction information included in the provision information D1. As a result, the information processing apparatus 200 is able to confirm the reaction of the user U on the basis of the reaction information included in the provision information D1, so that it is possible to further improve the estimation accuracy of existence of the purchase intent on the product M.

Moreover, the control unit 250 of the information processing apparatus 200 causes the output unit 16 to output the message at a timing at which reference to the content is not disturbed. With this configuration, the information processing apparatus 200 is able to issue the query to the user U at a timing at which reference to the content is not disturbed and which is synchronized with the advertising action. As a result, by preventing the reference to the content from being disturbed, the information processing apparatus 200 is able to further improve the estimation accuracy of the purchase intent based on the reaction of the user U.

Furthermore, if it is estimated that the purchase intent exists, the control unit 250 of the information processing apparatus 200 generates the intent information D2 including information capable of identifying the advertising action on the product M. With this configuration, the information processing apparatus 200 makes it possible to trace, from the intent information D2, the advertising action that causes the user U to have the purchase intent. As a result, by making it possible to recognize the relationship between the advertising action on the product M and the purchase intent of the user U, the information processing apparatus 200 is able to support evaluation, improvement, or the like on the advertising for the product M.

Moreover, the control unit 250 of the information processing apparatus 200 generates the intent information D2 including information indicating the user U for whom it is estimated the purchase intent exists. With this configuration, the information processing apparatus 200 is able to generate the intent information D2 capable of identifying the user U for whom it is estimated the purchase intent exists. As a result, the information processing apparatus 200 makes it possible to recognize the user U on the basis of the user information included in the intent information D2, so that it is possible to contribute to the advertising for the product M with respect to the user U.

Furthermore, the control unit 250 of the information processing apparatus 200 stores, in the storage unit 240, the provision information D1 that is acquired from an external apparatus via the communication unit 230. With this configuration, the information processing apparatus 200 is able to estimate the purchase intent on the product M on the basis of the provision information D1 that is acquired from the external apparatus. As a result, the information processing apparatus 200 is able to estimate the purchase intent on the product M indicated by the acquired provision information D1, so that it is possible to support the producer or the like to effectively advertise the product M.

Moreover, the control unit 250 of the information processing apparatus 200 provides the intent information D2 associated with the provision information D1 to the external apparatus. With this configuration, by providing the intent information D2 associated with the provision information D1 to the external apparatus of the producer or the like, the information processing apparatus 200 is able to allow the external apparatus to recognize a correspondence relationship between the provision information D1 and the intent information D2. As a result, the information processing apparatus 200 makes it possible to recognize the correspondence relationship between the provision information D1 and the intent information D2, so that it is possible to support evaluation, improvement, or the like on the advertising for the product M.

### Configuration of first apparatus according to first embodiment

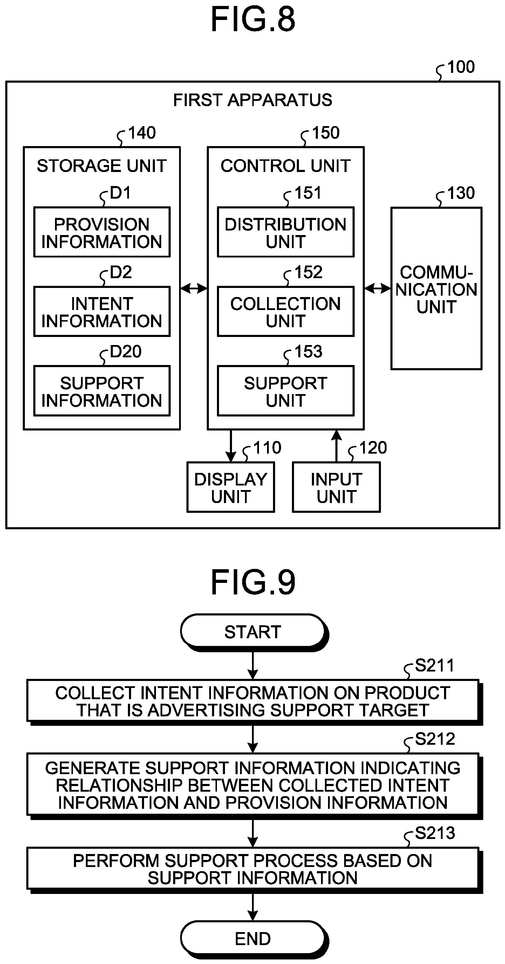

An example of a configuration of the first apparatus 100 will be described below. FIG. 8 is a diagram illustrating a configuration example of the first apparatus 100 according to the first embodiment. As illustrated in FIG. 8, the first apparatus 100 includes a display unit 110, an input unit 120, a communication unit 130, a storage unit 140, and a control unit 150. The control unit 150 is electrically connected to the display unit 110, the input unit 120, the communication unit 130, and the storage unit 140.

The display unit 110 has a function to display various kinds of information. The display unit 110 is controlled by the control unit 150. The display unit 110 includes, for example, a display device or the like that displays various kinds of information. Examples of the display device include an LCD device, an OLED device, and a touch panel. For example, the display unit 110 displays support information or the like for supporting the advertising for the product M. Further, the display unit 110 according to the present embodiment may output information or the like by using a projection function.

The input unit 120 includes an input device that allows an operator the like to perform input and selection. The input device includes, for example, a keyboard, a mouse, or the like. The input unit 120 may include, for example, a microphone for collecting voice of an operator or the like. The input unit 120 outputs the input information to the control unit 150.

The communication unit 130 has a function to perform information communication with the information processing apparatus 200 or the like via the network. Specifically, the communication unit 130 transmits information to a transmission destination that is designated by the control unit 150. The communication unit 130 outputs information that is received from an external electronic device to the control unit 150.

The storage unit 140 stores therein various kinds of data and programs. For example, the storage unit 140 is a semiconductor memory device, such as a RAM or a flash memory, a hard disk, an optical disk, or the like. The storage unit 140 stores therein, for example, various kinds of information, such as the provision information D1, the intent information D2, and support information D20. The support information D20 includes information for supporting the advertising for the product M. Meanwhile, an example of the support information D20 will be described later.

The control unit 150 is, for example, a dedicated or general-purpose computer. The control unit 150 controls operation of the first apparatus 100. The control unit 150 includes a distribution unit 151, a collection unit 152, and a support unit 153. Each of functions of the distribution unit 151, the collection unit 152, and the support unit 153 is implemented by, for example, causing a CPU, an MCU, or the like to execute a program stored in the control unit 150 by using a RAM or the like as a work area. Further, each of the processing units may be implemented by, for example, an integrated circuit, such as an ASIC or an FPGA.

The distribution unit 151 distributes the provision information D1 corresponding to the advertising for the product M to the single or the plurality of information processing apparatuses 200 or the like. The distribution unit 151 performs distribution to the information processing apparatus 200 that is set in advance, via the communication unit 130. For example, the distribution unit 151 distributes the provision information D1 before the advertising is performed. For example, if the advertising, a schedule of the advertising, or the like is changed the distribution unit 151 distributes new provision information D1.

The collection unit 152 collects the intent information D2 corresponding to the provision information D1 from the single or the plurality of information processing apparatuses 200. The collection unit 152 collects the intent information D2 from the information processing apparatus 200 to which the provision information D1 has been distributed, via the communication unit 130. The collection unit 152 chronologically stores the collected intent information D2 in the storage unit 140.

The support unit 153 supports the advertising for the product M on the basis of the intent information D2 acquired from the information processing apparatus 200. The support unit 153 generates the support information D20 indicating a relationship between the collected intent information D2 and the provision information D1, and supports the advertising on the basis of the support information D20. The support unit 153 supports the advertising for the product M in accordance with a support request issued by the producer. For example, the support unit 153 may generate the support information D20 indicating a change in the number of times of generation of the intent information D2 with reference to the time at which the advertising is performed. For example, the support unit 153 may generate the support information D20 indicating a relationship between a time range in which the advertising is performed and the intent information D2. The support unit 153 provides the support information D20 to the producer to make it possible to recognize the effectiveness of the advertising for the product M, whether the advertising is changed, or the like.

Thus, the functional configuration example of the first apparatus 100 according to the present embodiment has been described above. Meanwhile, the configuration as described above with reference to FIG. 8 is one example, and the functional configuration of the first apparatus 100 according to the present embodiment is not limited to this example. The functional configuration of the first apparatus 100 according to the present embodiment may be flexibly modified depending on specification or operation.

### Flow of process performed by first apparatus according to first embodiment

An example of the flow of a process performed by the first apparatus 100 according to the first embodiment will be described below with reference to FIG. 9. FIG. 9 is a flowchart illustrating the example of the flow of the process performed by the first apparatus 100 according to the first embodiment. The flow of the process illustrated in FIG. 9 is implemented by causing the control unit 150 of the first apparatus 100 to execute a program. The flow of the process illustrated in FIG. 9 is implemented by the control unit 150 when the first apparatus 100 receives a support request from the producer.

As illustrated in FIG. 9, the control unit 150 of the first apparatus 100 collects the intent information D2 on the product M that is an advertising support target (Step S211). For example, the control unit 150 may request the information processing apparatus 200, to which the provision information D1 has been distributed, to transmit the intent information D2, and collect the intent information D2 transmitted by the information processing apparatus 200. For example, the control unit 150 may collect the intent information D2 provided by the information processing apparatus 200. The control unit 150 stores the collected intent information D2 in the storage unit 140, and causes the process to proceed to Step S212.

The control unit 150 generates the support information D20 indicating a relationship between the collected intent information D2 and the provision information D1 (Step S212). For example, the control unit 150 generates the support information D20 indicating a relationship between the provision condition, which is for the advertising for the product M and which is indicated by the provision information D1, and the intent information D2. The control unit 150 stores the generated support information D20 in the storage unit 140, and causes the process to proceed to Step S213.

The control unit 150 performs a support process based on the support information D20 (Step S213). For example, the control unit 150 performs the support process to cause the display unit 110 to display the support information D20. For example, the control unit 150 executes the support information and causes an electronic device or the like, which is set in advance, to display the support information D20 via the communication unit 130. The support process may include a process of designating a change of the advertising. If the support process is completed, the control unit 150 terminates the flow of the process illustrated in FIG. 9.

In the example of the flow of the process illustrated in FIG. 9, the control unit 150 of the first apparatus 100 functions as the collection unit 152 as described above by performing the process at Step S211. The control unit 150 functions as the support unit 153 as described above by performing the processes from Step S212 to Step S213.

As described above, the support system 1 according to the first embodiment stores the provision information D1 provided by the first apparatus 100 in the storage unit 240 of the information processing apparatus 200. In the support system 1, if the provision condition indicated by the provision information D1 is met, the information processing apparatus 200 estimates the purchase intent on the product M on the basis of the reaction of the user to the advertising for the product M using the content. In the support system 1, the information processing apparatus 200 associates the intent information D2, which indicates that it is estimated that the user U has the purchase intent on the product M, with the provision information D1. With this configuration, in the support system 1, if the provision condition for the advertising is met, the information processing apparatus 200 estimates the purchase intent on the product M that is an advertising target on the basis of the reaction of the user U, so that it is possible to improve accuracy of an estimation result. In the support system 1, the information processing apparatus 200 associates the intent information D2 with the provision information D1, and therefore allows the first apparatus 100 side to trace the relationship between the advertising and the purchase intent. As a result, by making it possible to recognize the relationship between the advertising for the product M and the purchase intent of the user U, the support system 1 is able to support the producer or the like to effectively advertise the product M.

Furthermore, in the support system 1, if the control unit 250 of the information processing apparatus 200 estimates that the purchase intent on the product M exists, the control unit 250 generates the intent information D2 including information capable of identifying the advertising action on the product M. In the support system 1, the first apparatus 100 supports the advertising for the product M on the basis of the intent information D2 acquired from the information processing apparatus 200. With this configuration, in the support system 1, if the information processing apparatus 200 estimates that the purchase intent exists, the first apparatus 100 is able to support the advertising for the product M on the basis of the intent information D2 indicating the advertising action that causes the user U to have the purchase intent. As a result, by making it possible to recognize the relationship between the advertising action on the product M and the purchase intent of the user U, the support system 1 is able to support evaluation, improvement, or the like of the advertising of the product M.

Moreover, in the support system 1, the first apparatus 100 supports the advertising for the product M on the basis of the support information D20 indicating the relationship between the intent information D2 acquired from the information processing apparatus 200 and the provision information D1. With this configuration, in the support system 1, the first apparatus 100 is able to allow the producer, a person involved in the advertising, or the like to recognize the support information D20 indicating the relationship between the intent information D2 and the provision information D1. As a result, by making it possible to recognize the relationship between the provision information D1 and the intent information D2, the support system 1 is able to improve determination accuracy of evaluation on the advertising for the product M.

### Second Embodiment

### Overview of support system according to second embodiment

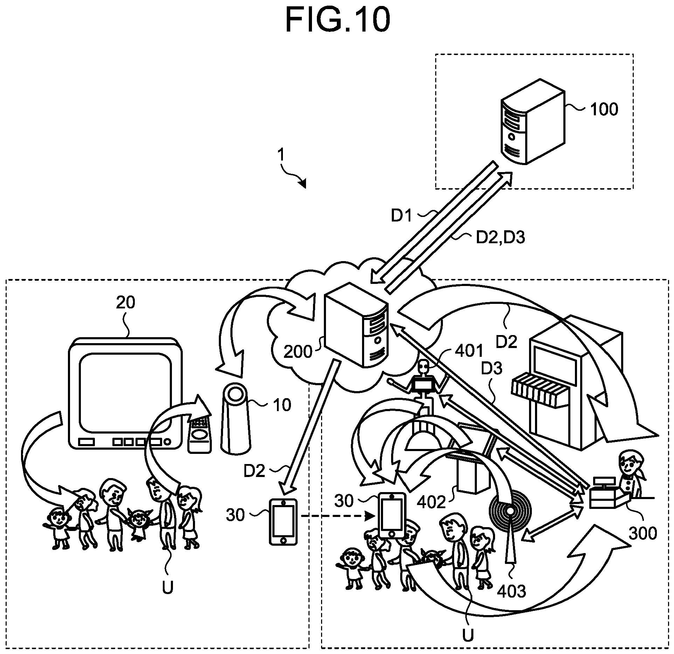

FIG. 10 is a diagram for explaining one example of the support system 1 according to the second embodiment. As illustrated in FIG. 10, the support system 1 includes the first apparatus 100, the information processing apparatus 200, and a second apparatus 300. The first apparatus 100, the information processing apparatus 200, and the second apparatus 300 are configured such that they can communicate with one another via a network or directly without the network, for example. The second apparatus 300 is installed in, for example, a store, a sales company, or the like.

For example, the first apparatus 100 distributes the provision information D1 to the information processing apparatus 200. If the advertising indicated by the distributed provision information D1 is performed, the information processing apparatus 200 estimates the purchase intent of the user U on the product M. If it is estimated that the purchase intent exists, the information processing apparatus 200 provides the intent information D2 to the second apparatus 300, the mobile electronic device 30 carried by the user U, and the like. The second apparatus 300 manages the sales performance of the product M. If the product M indicated by the intent information D2 is sold, the second apparatus 300 associates second information with performance information D3. The second apparatus 300 transmits the performance information D3 to the information processing apparatus 200. The information processing apparatus 200 provides the intent information D2 and the performance information D3 to the first apparatus 100.

### Configuration example of information processing apparatus according to second embodiment

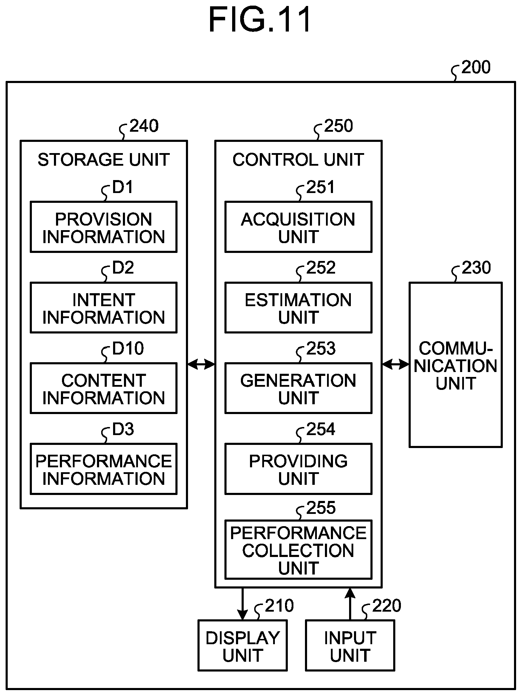

An example of a configuration of the information processing apparatus 200 according to the second embodiment will be described below. FIG. 11 is a diagram illustrating a configuration example of the information processing apparatus 200 according to the second embodiment. As illustrated in FIG. 11, the information processing apparatus 200 includes the display unit 210, the input unit 220, the communication unit 230, the storage unit 240, and the control unit 250.

The storage unit 240 stores therein, for example, various kinds of information, such as the provision information D1, the intent information D2, the content information D10, and the performance information D3. The performance information D3 is information indicating the sales performance of the product M indicated by the intent information D2. The performance information D3 is information received from the second apparatus 300.

The control unit 250 includes the acquisition unit 251, the estimation unit 252, the generation unit 253, the providing unit 254, and a performance collection unit 255. Each of functions of the acquisition unit 251, the estimation unit 252, the generation unit 253, the providing unit 254, and the performance collection unit 255 is implemented by, for example, causing a CPU, an MCU, or the like to execute a program stored in the control unit 250 by using a RAM or the like as a work area. Further, each of the processing units may be implemented by, for example, an integrated circuit, such as an ASIC or an FPGA.

The performance collection unit 255 collects the performance information D3 from the external apparatus to which the intent information D2 has been provided by the providing unit 254. The performance collection unit 255 collects the performance information D3 from the second apparatus 300 via the communication unit 230. The performance collection unit 255 makes it possible to trace the relationship between the intent information D2 and the performance information D3 by collecting the performance information D3 from the external apparatus to which the intent information D2 has been provided. The performance collection unit 255 may collect the performance information D3 on the product M from, for example, a point of sale (POS) system or the like. The performance collection unit 255 chronologically stores the collected performance information D3 in the storage unit 240.

If the performance collection unit 255 collects the performance information D3, the providing unit 254 provides the intent information D2 and the performance information D3 to the first apparatus 100. The providing unit 254 provides the intent information D2 and the performance information D3 to the first apparatus 100 via the communication unit 230. The providing unit 254 is able to simultaneously or separately provide the intent information D2 and the performance information D3 to the first apparatus 100.

### Configuration of second apparatus according to second embodiment

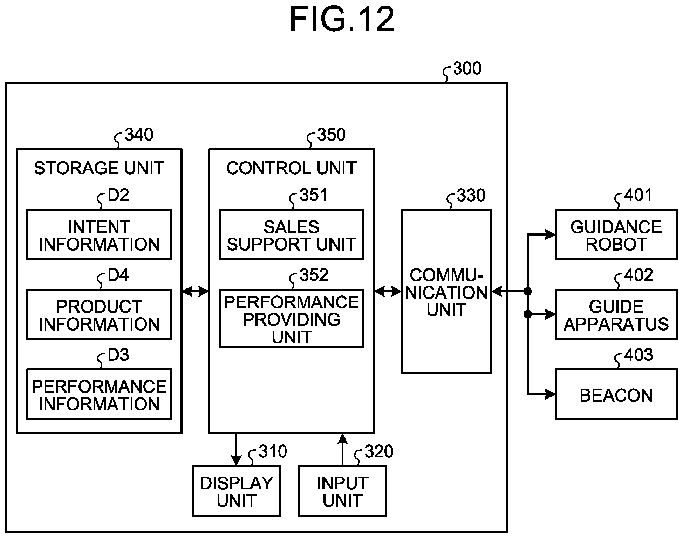

An example of a configuration of the second apparatus 300 will be described below. FIG. 12 is a diagram illustrating a configuration example of the second apparatus 300 according to the second embodiment. As the second apparatus 300, for example, a cache register installed in a shop, a general-purpose computer, or the like may be used. As illustrated in FIG. 12, the second apparatus 300 includes a display unit 310, an input unit 320, a communication unit 330, a storage unit 340, and a control unit 350. The control unit 350 is electrically connected to the display unit 310, the input unit 320, the communication unit 330, and the storage unit 340.

The display unit 310 has a function to display various kinds of information. The display unit 310 is controlled by the control unit 350. The display unit 310 includes, for example, a display device or the like that displays various kinds of information. Examples of the display device include a liquid crystal display device, an OLED device, and a touch panel. For example, the display unit 310 displays support information for supporting the advertising for the product M, or the like. Further, the display unit 310 according to the present embodiment may output information or the like by using a projection function.

The input unit 320 includes an input device that allows a store clerk or the like to perform input and selection. The input device includes, for example, an operation key of the cache register, a keyboard, a mouse, or the like. The input unit 320 may include, for example, a microphone for collecting voice of a store clerk or the like. The input unit 320 outputs input information to the control unit 150.

The communication unit 330 has a function to perform information communication with the information processing apparatus 200 or the like via the network. Specifically, the communication unit 330 transmits information to a transmission destination that is designated by the control unit 350. The communication unit 330 outputs information that is received from an external electronic device, such as the information processing apparatus 200, to the control unit 350. The communication unit 330 is able to perform communication with a guidance robot 401, a guide apparatus 402, a beacon 403, and the like that are installed in a store, by wire, by radio, or by near-field wireless communication.

The storage unit 340 stores therein various kinds of data and programs. For example, the storage unit 340 is a semiconductor memory device, such as a RAM or a flash memory, a hard disk, an optical disk, or the like. The storage unit 340 stores therein, for example, various kinds of information, such as the intent information D2, the performance information D3, and product information D4. The product information D4 includes, for example, information on the product M. The product information D4 may include, for example, information for advertising and introducing the product M, information for guiding to the product M in a store, or the like.

The control unit 350 is, for example, a dedicated or general-purpose computer. The control unit 350 controls operation of the second apparatus 300. The control unit 350 includes a sales support unit 351 and a performance providing unit 352. Each of functions of the sales support unit 351 and the performance providing unit 352 is implemented by, for example, causing a CPU, an MCU, or the like to execute a program stored in the control unit 350 by using a RAM or the like as a work area. Further, each of the processing units may be implemented by, for example, an integrated circuit, such as an ASIC or an FPGA.

The sales support unit 351 supports sales of the product M indicated by the intent information D2. The sales support unit 351 acquires the intent information D2 from, for example, the mobile electronic device 30 of the user U, and supports sales of the product M indicated by the acquired intent information D2. The sales support unit 351 supports sales of the product M by, for example, providing the product information D4 stored in the storage unit 340 to the user U or by guiding the user U to a sales floor.

For example, the sales support unit 351 may recognize that the user U who has visited the store has the purchase intent, through communication between the mobile electronic device 30 of the user U and a reading apparatus, such as the guidance robot 401 and the guide apparatus 402. For example, the sales support unit 351 acquires the intent information D2 from the mobile electronic device 30 via the reading apparatus, and performs support for stimulating a purchase of the product M indicated by the intent information D2. For example, the sales support unit 351 acquires information for identifying the user U from the mobile electronic device 30 via the reading apparatus, and performs support for stimulating a purchase of the product M on the basis of the intent information D2 that corresponds to the acquired information and that is stored in the storage unit 340.

For example, the sales support unit 351 causes the beacon 403 to transmit sales information or the like. The sales information includes, for example, information on a product that is sold near the beacon 403, information on an advertised product, or the like. In this case, when the mobile electronic device 30 receives the sales information from the beacon 403, and if the sales information includes information on the product for which it is estimated that the purchase intent exists, the mobile electronic device 30 notifies the user U of the information on the product. Further, if the sales information does not include the information on the product for which it is estimated that the purchase intent exists, the mobile electronic device 30 does not notify the user U of the sales information or the like. With this configuration, the mobile electronic device 30 is able to filter the received information on the basis of the purchase intent of the user U, so that it is possible to notify the user U of only information that is needed by the user U without disturbing the user U. For example, the user U may walk around inside a store or the like while searching for a product or may wander through the store or the like. In this case, if the mobile electronic device 30 receives the sales information from the beacon 403, the mobile electronic device 30 is able to notify the user U of the information on the product for which it is estimated that the purchase intent exists. As a result, the sales support unit 351 is able to support sales of the product by causing the mobile electronic device 30 to notify the user U of the product for which the purchase intent exists.

The performance providing unit 352 provides the performance information D3 including information indicating that the product M identified by the product ID in the intent information D2 is sold to the information processing apparatus 200 or the like. If the product M is sold with the support that is based on the intent information D2, the performance providing unit 352 associates the intent information D2 with the performance information D3. For example, the performance providing unit 352 is able to perform association by setting, in the performance information D3, the ID that is included in the intent information D2. The performance providing unit 352 provides the performance information D3 to the information processing apparatus 200 via the communication unit 330. The performance providing unit 352 provides the performance information D3 at a performance provision timing. The performance provision timing includes, for example, a timing at which the performance information D3 is generated, a timing that is set in advance, a timing at which a transmission request is received from the information processing apparatus 200, or the like.

Thus, the functional configuration example of the second apparatus 300 according to the present embodiment has been described above. Meanwhile, the configuration described above with reference to FIG. 12 is one example, and the functional configuration of the second apparatus 300 according to the present embodiment is not limited to this example. The functional configuration of the second apparatus 300 according to the present embodiment may be flexibly modified depending on specifications and operation.

### Configuration of first apparatus according to second embodiment

An example of a configuration of the first apparatus 100 will be described below. The first apparatus 100 according to the second embodiment has the same configuration as that of the first embodiment. The first apparatus 100 includes the display unit 110, the input unit 120, the communication unit 130, the storage unit 140, and the control unit 150. The control unit 150 includes the distribution unit 151, the collection unit 152, and the support unit 153.

The collection unit 152 further collects the intent information D2 and the performance information D3 corresponding to the provision information D1 from the single or the plurality of information processing apparatuses 200. The collection unit 152 collects the intent information D2 and the performance information D3 from the information processing apparatus 200 to which the provision information D1 has been distributed, via the communication unit 130. The collection unit 152 stores the collected intent information D2 and the collected performance information D3 in the storage unit 140.

The support unit 153 supports the advertising for the product M on the basis of the intent information D2 and the performance information D3 acquired from the information processing apparatus 200. The support unit 153 generates the support information D20 indicating a relationship among the collected intent information D2, the collected performance information D3, and the provision information D1, and supports the advertising on the basis of the support information D20. The support unit 153 provides the support information D20 to the producer to make it possible to recognize the effectiveness of the advertising for the product M, whether the advertising is changed, or the like.

### Operation of support system 1 according to second embodiment

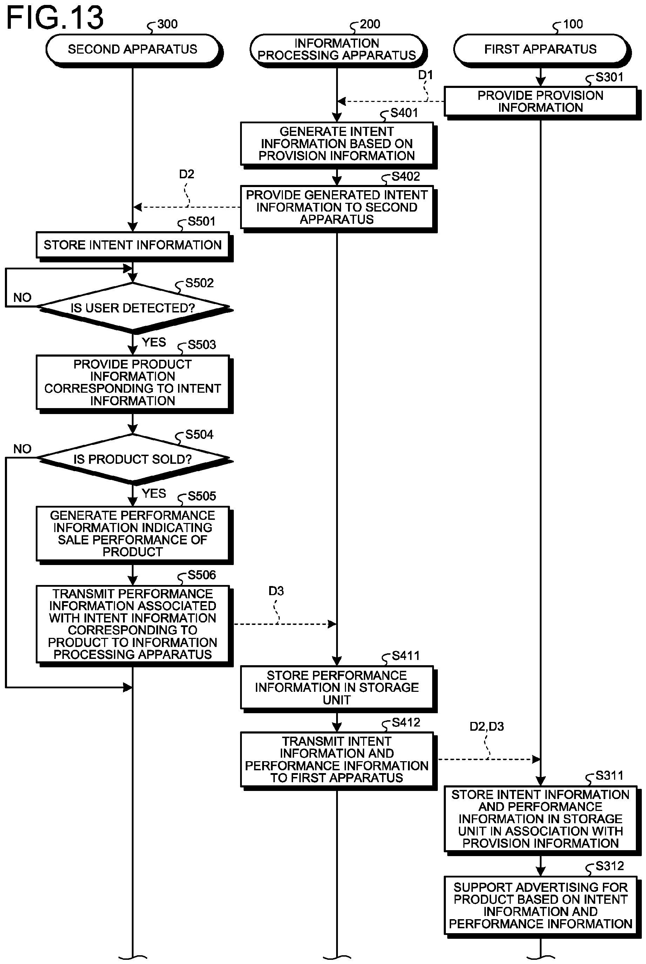

An example of operation of each of the apparatuses in the support system 1 according to the second embodiment will be described below with reference to FIG. 13. FIG. 13 is a sequence diagram illustrating an example of the operation of each of the apparatuses in the support system 1 according to the second embodiment. The operation of the first apparatus 100 is implemented by causing the control unit 150 to execute a program. The operation of the information processing apparatus 200 is implemented by causing the control unit 250 to execute a program. The operation of the second apparatus 300 is implemented by causing the control unit 350 to execute a program.

As illustrated in FIG. 13, the first apparatus 100 provides the provision information D1 to the information processing apparatus 200 via the communication unit 130 (Step S301).

Upon receiving the provision information D1 from the first apparatus 100, the information processing apparatus 200 generates the intent information D2 on the basis of the provision information D1 (Step S401). Meanwhile, a method of generating the intent information D2 is the same as the method adopted in the information processing apparatus 200 of the first embodiment, and therefore, explanation thereof will be omitted. The information processing apparatus 200 provides the generated intent information D2 to the second apparatus 300 via the communication unit 230 (Step S402).

Upon receiving the intent information D2 from the information processing apparatus 200, the second apparatus 300 stores therein the intent information D2 (Step S501). The second apparatus 300 determines whether the user U corresponding to the intent information D2 is detected (Step S502). For example, if the second apparatus 300 detects communication with the mobile electronic device 30 of the user U, predetermined operation performed by the user U, or the like, the second apparatus 300 determines that the user U is detected. If the second apparatus 300 determines that the user U is not detected (NO at Step S502), the second apparatus 300 repeats the process at Step S502 and waits for the user U to come to the store.

Further, if the second apparatus 300 determines that the user U is detected (YES at Step S502), the second apparatus 300 provides the product information D4 corresponding to the intent information D2 to the user U (Step S503). For example, the second apparatus 300 causes the mobile electronic device 30 of the user U to output the product information D4. For example, the second apparatus 300 causes the guidance robot 401, the guide apparatus 402, or the like to output the product information D4.

The second apparatus 300 determines whether the product M indicated by the intent information D2 is sold (Step S504). For example, if the product M is included in a record of sales, the second apparatus 300 determines that the product M is sold. If the second apparatus 300 determines that the product M is not sold (NO at Step S504), the second apparatus 300 performs a process that is determined in advance. Further, if the second apparatus 300 determines that the product M is sold (YES at Step S504), the process goes to Step S505.

The second apparatus 300 generates the performance information D3 indicating the sales performance of the product M (Step S505). The second apparatus 300 transmits the performance information D3 that is associated with the intent information D2 corresponding to the product M to the information processing apparatus 200 via the communication unit 330 (Step S506).

Upon receiving the performance information D3 from the second apparatus 300, the information processing apparatus 200 stores the performance information D3 in the storage unit 240 (Step S411). The information processing apparatus 200 transmits the intent information D2 and the performance information D3 to the first apparatus 100 via the communication unit 230 (Step S412). For example, the information processing apparatus 200 transmits the performance information D3 at a transmission timing. The transmission timing includes, for example, a timing at which the performance information D3 is received, a timing that is determined in advance, a timing at which a request is received from the first apparatus 100, or the like.

Upon receiving the performance information D3 or the like from the information processing apparatus 200, the first apparatus 100 stores the intent information D2 and the performance information D3 in the storage unit 140 in association with the provision information D1 (Step S311). The first apparatus 100 supports the advertising for the product M on the basis of the intent information D2 and the performance information D3 (Step S312). For example, the first apparatus 100 outputs the support information D20 to the producer, a person involved in the advertising, and the like to perform support based on a relationship between the purchase intent of the user U and actual sales performance.

### Example of support performed by first apparatus according to second embodiment

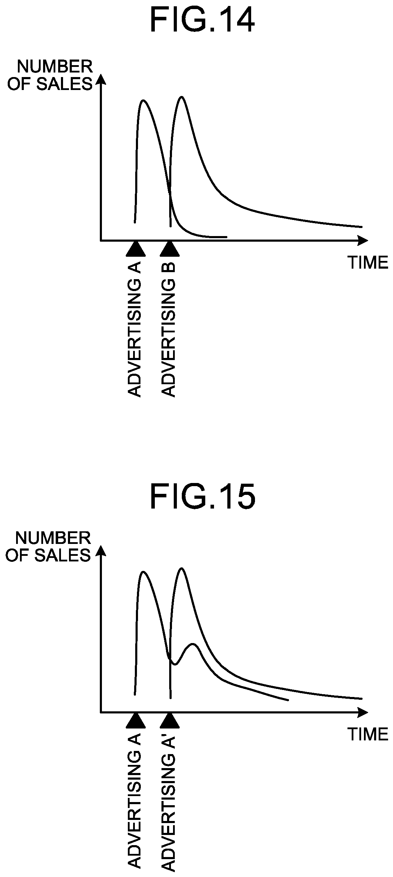

An example of support performed by the first apparatus 100 according to the second embodiment will be described below with reference to FIG. 14 and FIG. 15. FIG. 14 is a diagram illustrating an example of the support information D20 according to the second embodiment. FIG. 15 is a diagram illustrating another example of the support information D20 according to the second embodiment.

The support information D20 may be information for allowing the producer or the like to trace the advertising that causes the purchase intent to occur. With this information, the producer is able to recognize the timing and the way of the advertising that causes the purchase intent to occur. The producer is able to recognize the effect of sales promotion actions and more effectively perform advertising. For example, the producer is able to perform tests for advertising A and advertising B by randomly performing two kinds of sales promotion actions (for example, by changing CM parts) depending on viewing timings of a consumer and comparing respective effects. Further, the producer is able to predict the number of purchases caused by the advertising by recognizing a temporal change in the number of purchases since provision of the advertising, in addition to simply recognizing the effect of the advertising. With this configuration, the produce is able to recognize a timing at which the product is to be sold, a timing at which product shipping is needed, or the like due to the advertising action, so that it is possible to improve prediction accuracy of a business plan or production adjustment.

The producer is also able to plan how to perform advertising on the basis of a current stock quantity. In this manner, a tracing of a temporal change is effective information, but the information may be neglected after a lapse of a predetermined time because the influence of the sales promotion action is reduced in the long term. In contrast, by continuously tracing the effect of the advertising and recognizing a difference in persistence of effects in cases where similar kinds of advertising and different kinds of advertising are performed, the producer is able to effectively perform advertising. As illustrated in FIG. 14 and FIG. 15, the support information D20 may include information indicating relationships between different kinds of advertising and the numbers of sales.

As illustrated in FIG. 14, the support information D20 may include information indicating a relationship between an elapsed time and the number of sales for each of advertising A and advertising B. Meanwhile, the advertising A and the advertising B are different kinds of advertising for an identical product. The advertising B is a different kind of advertising that is performed after the advertising A. The number of sales indicates the number of sales associated with purchase intent for each of the advertising A and the advertising B.

As illustrated in FIG. 15, the support information D20 may include information on a relationship between the elapsed time and the number of sales for each of the advertising A and advertising A'. Meanwhile, the advertising A and the advertising A' are different kinds of advertising for an identical product. The advertising A' is similar advertising that is performed after the advertising A. The number of sales indicates the number of sales associated with purchase intent for each of the advertising A and the advertising A'.

Meanwhile, the second apparatus 300 according to the second embodiment may provide a part of POS information on a store. The second apparatus 300 may include, in the performance information D3, information on an age group, a time range, a store (or a store type, such as a suburban type or a station-side type), or the like of the POS information, for example. In this case, by generating the support information D20 by using a part of the POS information included in the performance information D3, the first apparatus 100 is able to support advertising by using information, such as an age group of a consumer, a time range, or a store.

As described above, in the support system 1 according to the first embodiment, the first apparatus 100 acquires the performance information D3 from the second apparatus 300, and supports the advertising for the product M on the basis of the intent information D2 and the performance information D3. With this configuration, in the support system 1, the second apparatus 300 is able to allow the producer or the like to recognize a series of results from the purchase intent to the sales performance caused by the advertising for the product M, on the basis of the intent information D2 and the performance information D3. As a result, by making it possible to recognize the relationship among the advertising for the product M, the purchase intent of the user U, and the sales performance, the support system 1 is able to support the producer or the like to more effectively advertise the product M.

Furthermore, in the support system 1, if the product M indicated by the intent information D2 is sold, the second apparatus 300 associates the intent information D2 with the performance information D3. In the support system 1, the first apparatus 100 that has acquired the performance information D3 associated with the intent information D2 supports the advertising for the product M on the basis of the intent information D2 and the performance information D3. With this configuration, by associating the intent information D2 and the performance information D3, the support system 1 is able to clarify a relationship between the purchase intent of the user U and a purchase action. As a result, by making it possible to recognize the relationship among the advertising action on the product M, the purchase intent of the user U, and a purchase result, the support system 1 is able to support evaluation, improvement, or the like on the advertising for the product M based on a series of actions performed by the user U. In addition, the support system 1 is able to improve accuracy of measurement of effectiveness of sales promotion actions and accuracy of sales prediction, and contribute to improvement in effectiveness of production adjustment and the sales promotion actions.

Moreover, in the support system 1, the information processing apparatus 200 provides the intent information D2 to the mobile electronic device 30 of the user U, and, the second apparatus 300 acquires the intent information D2 from the mobile electronic device 30 and supports sales of the product M indicated by the acquired intent information D2. With this configuration, the support system 1 is able to provide the intent information D2 to the second apparatus 300 via the mobile electronic device 30 of the user U. As a result, in the support system 1, the second apparatus 300 is able to recognize the user U who has the purchase intent and encourage the user U to perform a purchase action, so that it is possible to contribute to sales promotion for the product M. In addition, the support system 1 is able to prevent the user U who has a will to purchase from forgetting to purchase the product M, so that it is possible to improve usability.

### Third Embodiment

### Configuration of information processing apparatus according to third embodiment

The information processing apparatus 200 according to the first and the second embodiments may be configured to support the user U, for whom it is estimated that the purchase intent exists, to purchase the product M. In the third embodiment, an example of the information processing apparatus 200 that has a function to support a purchase of the product M will be described.

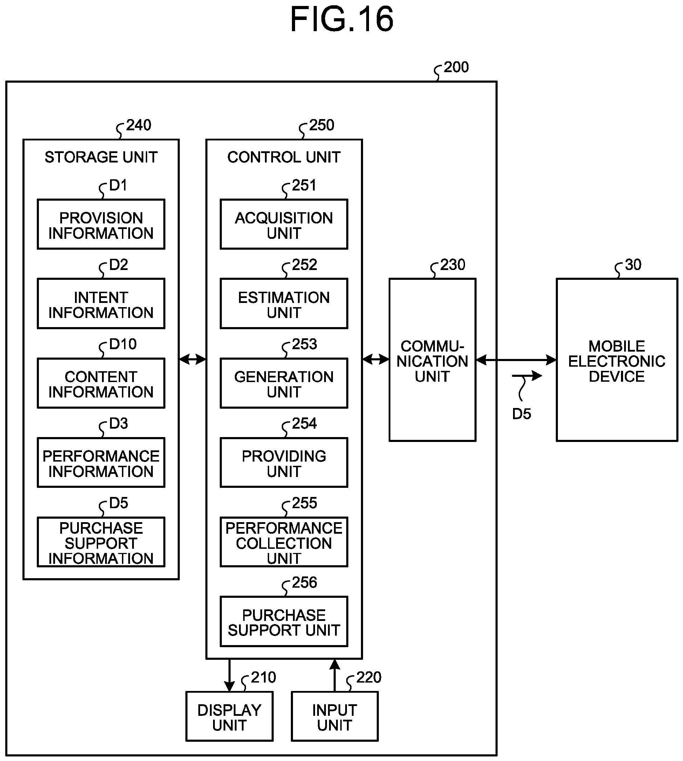

FIG. 16 is a diagram illustrating a configuration example of the information processing apparatus 200 according to the third embodiment. As illustrated in FIG. 16, the information processing apparatus 200 includes the display unit 210, the input unit 220, the communication unit 230, the storage unit 240, and the control unit 250.

The storage unit 240 further stores therein purchase support information D5. The purchase support information D5 is information for supporting a purchase of the product M indicated by the intent information D2. For example, the purchase support information D5 includes information for guiding the user U to an electronic commerce (EC) site or an affiliate site. For example, the purchase support information D5 may include information for displaying a display of the product M indicated by the intent information D2 on an EC site, an affiliate site, a television, or the like.

The control unit 250 includes the acquisition unit 251, the estimation unit 252, the generation unit 253, the providing unit 254, the performance collection unit 255, and a purchase support unit 256. Each of functions of the acquisition unit 251, the estimation unit 252, the generation unit 253, the providing unit 254, the performance collection unit 255, and the purchase support unit 256 is implemented by, for example, causing a CPU, an MCU, or the like to execute a program stored in the control unit 250 by using a RAM or the like as a work area. Further, each of the processing units may be implemented by, for example, an integrated circuit, such as an ASIC or an FPGA.

If the estimation unit 252 estimates that the purchase intent exists, the purchase support unit 256 supports a purchase of the product M for which the purchase intent exists. The purchase support unit 256 generates, for example, the purchase support information D5, and supports a purchase of the product M on the basis of the purchase support information D5. The purchase support unit 256 collects, for example, information on a site, a store, or the like where the product M can be purchased, and generates the purchase support information D5 for outputting the collected information to the user U. The purchase support unit 256 causes, for example, an external electronic device that is viewed by the user U to output the generated purchase support information D5. In the support system 1 illustrated in FIG. 2, the information processing apparatus 200 instructs the mobile electronic device 30 of the user U to give a notice of the purchase support information D5, via the communication unit 230. With this configuration, the mobile electronic device 30 notifies the user U of the received purchase support information D5 to guide the user U to an affiliate site, an web site, a store, or the like where the product M can be purchased.

For example, the user U records the intent information D2 in a user session and visits the affiliate site. The affiliate site generates, from the user session, a link to an EC site in accordance with the purchase intent. A producer, a service provider that provides the purchase intent, or the like may provide, to an operator of the affiliate site, a template or a library for generating a site structure as described above. Further, the information processing apparatus 200 is able to cooperate with a plurality of EC sites and generate the purchase support information D5 that includes an optimal link among options of the plurality of EC sites by reflecting the recognized purchase intent of the user U and stock quantities in the EC sites. Similarly, the information processing apparatus 200 may generate the purchase support information D5 that includes a link to an EC site with a high close rate, on the basis of feedbacks on the sales performance in the EC sites. Furthermore, the information processing apparatus 200 may be realized by a computer of an EC site.

As described above, the information processing apparatus 200 according to the third embodiment, if it is estimated that the purchase intent on the product M exists, causes the control unit 250 to support a purchase of the product M for which the purchase intent exists. With this configuration, by supporting a purchase of the product M for which the purchase intent exists, the information processing apparatus 200 is able to improve the probability that the user U purchases the product M. As a result, by supporting the user U for whom it is estimated that the purchase intent on the product M exists, the information processing apparatus 200 is able to contribute to improvement in sales efficiency.

Meanwhile, the third embodiment as described above is one example, and various modifications and applications may be made. The information processing apparatus 200 of the third embodiment may be applied to the other embodiments and the like.

### Hardware configuration

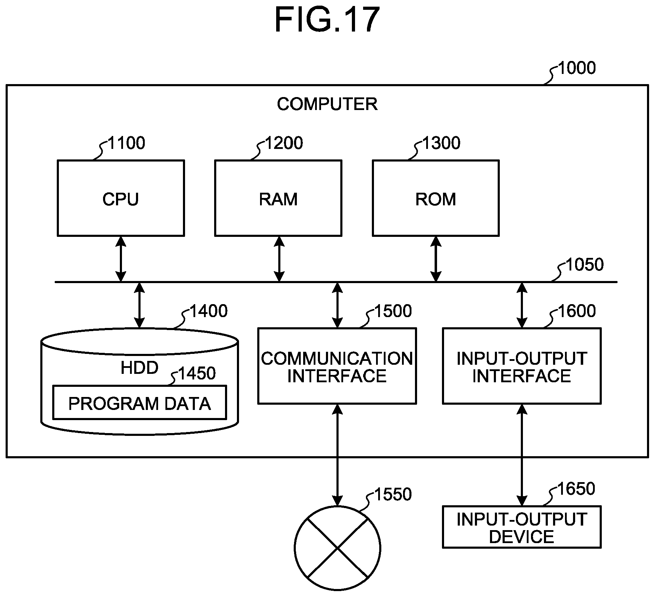

Each of the information processing apparatus 200, the first apparatus 100, and the second apparatus 300 according to the present embodiments as described above may be implemented by a computer 1000 that has a configuration as illustrated in FIG. 17, for example. In the following, the information processing apparatus 200 according to the embodiments will be described as an example. FIG. 17 is a hardware configuration diagram illustrating an example of the computer 1000 that implements the functions of the information processing apparatus 200. The computer 1000 includes a CPU 1100, a RAM 1200, a read only memory (ROM) 1300, a hard disk drive (HDD) 1400, a communication interface 1500, and an input-output interface 1600. All of the components of the computer 1000 are connected to one another via a bus 1050.

The CPU 1100 operates based on a program that is stored in the ROM 1300 or the HDD 1400, and controls each of the units. For example, the CPU 1100 loads programs stored in the ROM 1300 or the HDD 1400 onto the RAM 1200, and performs processes corresponding to the various programs.

The ROM 1300 stores therein a boot program, such as basic input output system (BIOS), which is executed by the CPU 1100 at the time of activating the computer 1000, a program that depends on the hardware of the computer 1000, and the like.

The HDD 1400 is a computer readable recording medium that stores therein, in a non-transitory manner, programs executed by the CPU 1100, data used by the programs, and the like. Specifically, the HDD 1400 is a recording medium in which an information processing program according to the present disclosure that is one example of program data 1450 is recorded.

The communication interface 1500 is an interface that allows the computer 1000 to connect to an external network 1550 (for example, the Internet). For example, the CPU 1100 receives data from a different apparatus or transmits data generated by the CPU 1100 to a different apparatus, via the communication interface 1500.

The input-output interface 1600 is an interface that allows an input-output device 1650 and the computer 1000 to connect to each other. For example, the CPU 1100 receives data from an input device, such as a keyboard or a mouse, via the input-output interface 1600. Further, the CPU 1100 outputs data to an output device, such as a display, a speaker, or a printer, via the input-output interface 1600. Furthermore, the input-output interface 1600 may function as a media interface that reads a program or the like that is recorded in a predetermined recording medium (media). Examples of the media include an optical recording medium, such as a digital versatile disk (DVD), a magneto optical recording medium, such as a magneto optical disk (MO), a tape medium, a magnetic recording medium, or a semiconductor memory.

For example, if the computer 1000 functions as the information processing apparatus 200 according to the embodiments, the CPU 1100 of the computer 1000 executes the program loaded on the RAM 1200, and implements the functions of the acquisition unit 251, the estimation unit 252, the generation unit 253, the providing unit 254, the performance collection unit 255, and the purchase support unit 256 of the control unit 250, for example. Further, the HDD 1400 stores therein the program according to the present disclosure and the data that is stored in the storage unit 240. Meanwhile, the CPU 1100 reads the program data 1450 from the HDD 1400 and executes the program data 1450, but as another example, it may be possible to acquire the program from a different apparatus via an external network 1550.

While the preferred embodiments of the present disclosure have been described in detail above with reference to the accompanying drawings, the technical scope of the present disclosure is not limited to the examples as described above. It is obvious that a person skilled in the technical field of the present disclosure may conceive various alternations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Furthermore, it is possible to generate a program that causes hardware, such as a CPU, a ROM, and a RAM, included in a computer to implement the same functions as those of the components included in the information processing apparatus 200, and a computer-readable recording medium with the program recorded thereon may be provided.

Moreover, each of Steps in the processes performed by the information processing apparatus 200 of the present specification need not always be processed in chronological order as illustrated in the flowcharts. For example, each of Steps related to the processes performed by the information processing apparatus 200 may be executed in different order from the order illustrated in the flowcharts, or may be performed in a parallel manner.

### Effects

The information processing apparatus 200 includes the storage unit 240 that stores therein the provision information D1 including a provision condition for advertising for a product in a content, and the control unit 250 that estimates the purchase intent on the product M on the basis of a reaction of the user U to the advertising for the product M using the content if the provision condition indicated by the provision information D1 is met. The control unit 250 associates the intent information D2, which indicates that it is estimated that the user U has the purchase intent on the product, with the provision information.

With this configuration, if the provision condition for the advertising is met, the information processing apparatus 200 estimates the purchase intent on the product M that is an advertising target on the basis of the reaction of the user U, so that it is possible to improve accuracy of an estimation result. The information processing apparatus 200 associates the intent information D2 with the provision information D1, and therefore makes it possible to trace a relationship between the advertising and the purchase intent. As a result, by making it possible to recognize the relationship between the advertising for the product M and the purchase intent of the user U, the information processing apparatus 200 is able to support the producer or the like to effectively advertise the product M.

In the information processing apparatus 200, if the control unit 250 estimates that the user U has the purchase intent, the control unit 250 generates the intent information D2 capable of identifying the product M and the content of the advertising for the product M.

With this configuration, the information processing apparatus 200 makes it possible to recognize a relationship between the product M for which it is estimated that the purchase intent exists and the content of the advertising, by using the intent information D2. As a result, by making it possible to recognize the relationship between the purchase intent of the user U and the content of the advertising on the basis of the intent information D2, the information processing apparatus 200 is able to allow the producer or the like to recognize effectiveness of the content of the advertising for the product M.

In the information processing apparatus 200, the provision information D1 includes a message indicating a query to the user U who refers to the advertising for the product M, and if the provision condition indicated by the provision information D1 is met, the control unit 250 causes the output unit 16 to output the message and estimates the purchase intent on the basis of a reaction of the user U to the message.

With this configuration, the information processing apparatus 200 is able to issue the query to the user U in accordance with the advertising for the product M, and estimate the purchase intent on the basis of the reaction of the user U to the query. As a result, by issuing the query to the user U who has recognized the advertising, the information processing apparatus 200 is able to further improve estimation accuracy of existence of the purchase intent on the product.

In the information processing apparatus 200, the provision information D1 includes the reaction information indicating a reaction of the user, where the reaction corresponds to the message and indicates existence of the purchase intent, and the control unit 250 estimates that the purchase intent exists if a reaction of the user U as indicated by the reaction information is detected.

With this configuration, the information processing apparatus 200 is able to estimate the purchase intent by comparing the reaction of the user U to the message of the query and the reaction information included in the provision information D1. As a result, the information processing apparatus 200 is able to confirm the reaction of the user U on the basis of the reaction information included in the provision information D1, so that it is possible to further improve the estimation accuracy of existence of the purchase intent on the product M.

In the information processing apparatus 200, the control unit 250 causes the output unit 16 to output the message at a timing at which reference to the content is not disturbed.

With this configuration, the information processing apparatus 200 is able to issue the query to the user U at a timing at which reference to the content is not disturbed and which is synchronized with the advertising action. As a result, by preventing the reference to the content from being disturbed, the information processing apparatus 200 is able to improve probability that the user U reacts to the query, so that it is possible to further improve the estimation accuracy of the purchase intent based on the reaction of the user U.

In the information processing apparatus 200, if the control unit 250 estimates that the purchase intent exists, the control unit 250 generates the intent information D2 including information capable of identifying the advertising action on the product M.

With this configuration, the information processing apparatus 200 makes it possible to trace, from the intent information D2, the advertising action that causes the user U to have the purchase intent. As a result, by making it possible to recognize the relationship between the advertising action on the product M and the purchase intent of the user U, the information processing apparatus 200 is able to support evaluation, improvement, or the like on the advertising for the product M.

In the information processing apparatus 200, the control unit 250 generates the intent information including the user information indicating the user U for whom it is estimated that the purchase intent exists.

With this configuration, the information processing apparatus 200 is able to generate the intent information D2 capable of identifying the user U for whom it is estimated that the purchase intent exists. As a result, the information processing apparatus 200 makes it possible to recognize the user U on the basis of the user information included in the intent information D2, so that it is possible to contribute to the advertising for the product M with respect to the user U.

The information processing apparatus 200 further includes the communication unit 230, and the control unit 250 stores, in the storage unit 240, the provision information D1 that is acquired from an external apparatus via the communication unit 230.

With this configuration, the information processing apparatus 200 is able to estimate the purchase intent on the product M on the basis of the provision information D1 that is acquired from the external apparatus. As a result, the information processing apparatus 200 is able to estimate the purchase intent on the product M indicated by the acquired provision information D1, so that it is possible to support the producer or the like to effectively advertise the product M.

In the information processing apparatus 200, the control unit 250 provides the intent information D2 associated with the provision information D1 to the external apparatus.

With this configuration, by providing the intent information D2 associated with the provision information D1 to the external apparatus of the producer or the like, the information processing apparatus 200 is able to allow the external apparatus side to recognize a correspondence relationship between the provision information D1 and the intent information D2. As a result, the information processing apparatus 200 makes it possible to recognize the correspondence relationship between the provision information D1 and the intent information D2, so that it is possible to support evaluation, improvement, or the like on the advertising for the product M.

In the information processing apparatus 200, if it is estimated that the purchase intent exists, the control unit 250 supports a purchase of the product M for which the purchase intent exists.

With this configuration, by supporting the purchase of the product M for which the purchase intent exists, the information processing apparatus 200 is able to improve probability that the user U purchases the product M. For example, a notice of the product M for which the purchase intent does not exist may be disturbing for the user U, and may discourage a purchase action or the like of the user U. In contrast, the information processing apparatus 200 is able to narrow down a target for the purchase support because the product M for which the purchase intent exists is recognized. As a result, the information processing apparatus 200 is able to support the user, for whom it is estimated the purchase intent exists, to purchase the product M, so that it is possible to contribute to improvement in sales efficiency, without disturbing the user U.

The support system 1 is the support system 1 including the first apparatus 100 that provides the provision information D1, which includes the provision condition for a content of advertising for the product M, and including the information processing apparatus 200. The information processing apparatus 200 includes the storage unit 240 that stores therein the provision information D1 provided by the first apparatus 100, and the control unit 250 that estimates the purchase intent on the product M on the basis of a reaction of the user U to the advertising for the product M using the content if the provision condition indicated by the provision information D1 is met. The control unit 250 associates the intent information, which indicates that it is estimated that the user U has the purchase intent on the product M, with the provision information D1.

With this configuration, in the support system 1, if the provision condition for the advertising is met, the information processing apparatus 200 estimates the purchase intent on the product M that is an advertising target on the basis of the reaction of the user U, so that it is possible to improve accuracy of an estimation result. In the support system 1, the information processing apparatus 200 associates the intent information D2 with the provision information D1, and therefore allows the first apparatus 100 side to trace the relationship between the advertising and the purchase intent. As a result, by making it possible to recognize the relationship between the advertising for the product M and the purchase intent of the user U, the support system 1 is able to support the producer or the like to effectively advertise the product M.

In the support system 1, if the support system 1, if the control unit 250 of the information processing apparatus 200 estimates that the purchase intent exists, the control unit 250 generates the intent information including information capable of identifying the advertising action on the product, and the first apparatus 100 supports the advertising for the product M on the basis of the intent information D2 acquired from the information processing apparatus 200.

With this configuration, in the support system 1, if the information processing apparatus 200 estimates that the purchase intent exists, the first apparatus 100 is able to support the advertising for the product M on the basis of the intent information D2 indicating the advertising action that causes the user U to have the purchase intent. As a result, by making it possible to recognize the relationship between the advertising action on the product M and the purchase intent of the user U, the support system 1 is able to support evaluation, improvement, or the like on the advertising for the product M.

In the support system 1, the first apparatus 100 supports the advertising for the product M on the basis of the support information D20 indicating the relationship between the intent information D2 acquired from the information processing apparatus 200 and the provision information D1.

With this configuration, in the support system 1, the first apparatus 100 is able to allow the producer, a person involved in the advertising, or the like to recognize the support information D20 indicating the relationship between the intent information D2 and the provision information D1. As a result, by making it possible to recognize the relationship between the provision information D1 and the intent information D2, the support system 1 is able to improve determination accuracy of evaluation on the advertising for the product M.

The support system 1 further includes the second apparatus 300 that manages the performance information D3 indicating sales performance on the product M, and the first apparatus 100 acquires the performance information D3 and supports the advertising for the product M on the basis of the intent information D2 and the performance information D3.

With this configuration, in the support system 1, the second apparatus 300 is able to allow the producer or the like to recognize a series of results from the purchase intent to the sales performance caused by the advertising for the product M, on the basis of the intent information D2 and the performance information D3. As a result, by making it possible to recognize the relationship among the advertising for the product M, the purchase intent of the user U, and the sales performance, the support system 1 is able to support the producer or the like to more effectively advertise the product M.

In the support system 1, if the product M indicated by the intent information D2 is sold, the second apparatus 300 associates the intent information D2 with the performance information D3, and the first apparatus 100 acquires the performance information D3 associated with the intent information D2 and supports the advertising for the product M on the basis of the intent information D2 and the performance information D3.

With this configuration, by associating the intent information D2 and the performance information D3, the support system 1 is able to clarify the relationship between the purchase intent of the user U and a purchase action. As a result, by making it possible to recognize the relationship among the advertising action on the product M, the purchase intent of the user U, and a purchase result, the support system 1 is able to support evaluation, improvement, or the like on the advertising for the product M on the basis of a series of actions performed by the user U. In addition, the support system 1 is able to improve accuracy of measurement of effectiveness of sales promotion actions or accuracy of sales predictions, and contribute to improvement in effectiveness of production adjustment and the sales promotion actions.

In the support system 1, the information processing apparatus 200 provides the intent information D2 to the mobile electronic device 30 of the user U, and, the second apparatus 300 acquires the intent information D2 from the mobile electronic device 30 and supports sales of the product M indicated by the acquired intent information D2.

With this configuration, the support system 1 is able to provide the intent information D2 to the second apparatus 300 via the mobile electronic device 30 of the user U. As a result, in the support system 1, the second apparatus 300 is able to recognize the user U who has the purchase intent and encourage the user U to perform a purchase action, so that it is possible to contribute to sales promotion for the product M. In addition, the support system 1 is able to prevent the user U who has a will to purchase from forgetting to purchase the product M, so that it is possible to improve usability.

A control method is a control method that is implemented by the information processing apparatus 200 including the storage unit 240 that stores therein the provision information D1 including a provision condition for advertising for a product in a content, and includes estimating the purchase intent on the product M on the basis of a reaction of the user U to the advertising for the product M using the content if the provision condition indicated by the provision information D1 is met, and associating the intent information D2, which indicates that it is estimated that the user U has the purchase intent on the product M, with the provision information D1.

With this configuration, in the control method, if the provision condition for the advertising is met, the information processing apparatus 200 estimates the purchase intent on the product M that is an advertising target on the basis of the reaction of the user U, so that it is possible to improve accuracy of an estimation result. In the control method, the information processing apparatus 200 associates the intent information D2 with the provision information D1, and therefore makes it possible to trace a relationship between the advertising and the purchase intent. As a result, in the control method, by making it possible to recognize the relationship between the advertising for the product M and the purchase intent of the user U, the information processing apparatus 200 is able to support the producer or the like to effectively advertise the product M.

The following configurations are also within the technical scope of the present disclosure.
(1) An information processing apparatus comprising:
   a storage unit that stores therein provision information including a provision condition for advertising for a product in a content; and
   a control unit that estimates purchase intent on the product on the basis of a reaction of a user to the advertising for the product using the content if the provision condition indicated by the provision information is met, wherein
   the control unit associates intent information with the provision information, the intent information indicating that it is estimated that the user has purchase intent on the product.
(2) The information processing apparatus according to (1), wherein if the control unit estimates that the user has the purchase intent, the control unit generates the intent information capable of identifying the product and the content of the advertising for the product.
(3) The information processing apparatus according to (1) or (2), wherein
   the provision information includes a message indicating a query to the user who refers to the advertising for the product, and
   if the provision condition indicated by the provision information is met, the control unit causes an output unit to output the message and estimates the purchase intent on the basis of a reaction of the user on the message.
(4) The information processing apparatus according to (3), wherein
   the provision information includes reaction information indicating a reaction of the user, the reaction corresponding to the message and indicating existence of the purchase intent, and
   the control unit estimates that the purchase intent exists if a reaction of the user as indicated by the reaction information is detected.
(5) The information processing apparatus according to (3) or (4), wherein the control unit causes the output unit to output the message at a timing at which reference to the content is not disturbed.
(6) The information processing apparatus according to any one of (1) to (5), wherein if the control unit estimates that the purchase intent exists, the control unit generates the intent information including information capable of identifying an advertising action on the product.
(7) The information processing apparatus according to any one of (1) to (6), wherein the control unit generates the intent information including user information indicating the user for whom it is estimated that the purchase intent exists.
(8) The information processing apparatus according to any one of (1) to (7) further comprising:
   a communication unit, wherein
   the control unit stores, in the storage unit, the provision information that is acquired from an external apparatus via the communication unit.
(9) The information processing apparatus according to (8), wherein the control unit provides the intent information associated with the provision information to the external apparatus.
(10) The information processing apparatus according to any one of (1) to (9), wherein if it is estimated that the purchase intent exists, the control unit supports a purchase of the product for which the purchase intent exists.
(11) A support system comprising:
   a first apparatus that provides provision information including a provision condition for a content of advertising for a product; and
   an information processing apparatus, wherein
      the information processing apparatus includes
      a storage unit that stores therein the provision information provided by the first apparatus; and
      a control unit that estimates purchase intent on the product on the basis of a reaction of the user to the advertising for the product using the content if the provision condition indicated by the provision information is met, and
   the control unit associates intent information with the provision information, the intent information indicating that it is estimated that the user has the purchase intent on the product.
(12) The support system according to (11), wherein
   if the control unit of the information processing apparatus estimates that the purchase intent exists, the control unit generates the intent information including information capable of identifying an advertising action on the product, and
   the first apparatus supports the advertising for the product on the basis of the intent information acquired from the information processing apparatus.
(13) The support system according to (12), wherein the first apparatus supports the advertising for the product on the basis of support information indicating a relationship between the intent information acquired from the information processing apparatus and the provision information.
(14) The support system according to (12) or (13), further comprising:
   a second apparatus that manages performance information indicating sales performance on the product, wherein
   the first apparatus acquires the performance information and supports the advertising for the product on the basis of the intent information and the performance information.
(15) The support system according to any one of (12) to (14),
   if the product indicated by the intent information is sold, the second apparatus associates the intent information with the performance information, and
   the first apparatus acquires the performance information associated with the intent information and supports the advertising for the product on the basis of the intent information and the performance information.
(16) The support system according to any one of (12) to (15), wherein
   the information processing apparatus provides the intent information to a mobile electronic device of the user, and
   the second apparatus acquires the intent information from the mobile electronic device, and supports sales of the product indicated by the intent information.
(17) A control method implemented by an information processing apparatus including a storage unit that stores therein provision information including a provision condition for advertising for a product in a content, the control method comprising:
   estimating purchase intent on the product on the basis of a reaction of a user to the advertising for the product using the content if the provision condition indicated by the provision information is met; and
   associating intent information with the provision information, the intent information indicating that it is estimated that the user has the purchase intent on the product.

### Reference Signs List

- 1: support system
- 10: agent device
- 11: sensor
- 12: sound collection unit
- 13: communication unit
- 14: storage unit
- 15: control unit
- 16: output unit
- 100: first apparatus
- 110: display unit
- 120: input unit
- 130: communication unit
- 140: storage unit
- 150: control unit
- 200: information processing apparatus
- 210: display unit
- 220: input unit
- 230: communication unit
- 240: storage unit
- 250: control unit
- 251: acquisition unit
- 252: estimation unit
- 253: generation unit
- 254: providing unit
- 255: performance collection unit
- 256: purchase support unit
- 300: second apparatus
- 310: display unit
- 320: input unit
- 330: communication unit
- 340: storage unit
- 350: control unit
- M: product
- D1: provision information
- D2: intent information
- D3: performance information
- D4: product information
- D5: purchase support information
- D10: content information
- D20: support information

## Claims

1. An information processing apparatus comprising:
a storage unit that stores therein provision information including a provision condition for advertising for a product in a content; and
a control unit that estimates purchase intent on the product on the basis of a reaction of a user to the advertising for the product using the content if the provision condition indicated by the provision information is met, wherein
the control unit associates intent information with the provision information, the intent information indicating that it is estimated that the user has purchase intent on the product.

2. The information processing apparatus according to claim 1, wherein if the control unit estimates that the user has the purchase intent, the control unit generates the intent information capable of identifying the product and the content of the advertising for the product.

3. The information processing apparatus according to claim 2, wherein
the provision information includes a message indicating a query to the user who refers to the advertising for the product, and
if the provision condition indicated by the provision information is met, the control unit causes an output unit to output the message and estimates the purchase intent on the basis of a reaction of the user on the message.

4. The information processing apparatus according to claim 3, wherein
the provision information includes reaction information indicating a reaction of the user, the reaction corresponding to the message and indicating existence of the purchase intent, and
the control unit estimates that the purchase intent exists if a reaction of the user as indicated by the reaction information is detected.

5. The information processing apparatus according to claim 3, wherein the control unit causes the output unit to output the message at a timing at which reference to the content is not disturbed.

6. The information processing apparatus according to claim 2, wherein if the control unit estimates that the purchase intent exists, the control unit generates the intent information including information capable of identifying an advertising action on the product.

7. The information processing apparatus according to claim 2, wherein the control unit generates the intent information including user information indicating the user for whom it is estimated that the purchase intent exists.

8. The information processing apparatus according to claim 2 further comprising:
a communication unit, wherein
the control unit stores, in the storage unit, the provision information that is acquired from an external apparatus via the communication unit.

9. The information processing apparatus according to claim 8, wherein the control unit provides the intent information associated with the provision information to the external apparatus.

10. The information processing apparatus according to claim 8, wherein if it is estimated that the purchase intent exists, the control unit supports a purchase of the product for which the purchase intent exists.

11. A support system comprising:
a first apparatus that provides provision information including a provision condition for a content of advertising for a product; and
an information processing apparatus, wherein
the information processing apparatus includes
a storage unit that stores therein the provision information provided by the first apparatus; and
a control unit that estimates purchase intent on the product on the basis of a reaction of the user to the advertising for the product using the content if the provision condition indicated by the provision information is met, and
the control unit associates intent information with the provision information, the intent information indicating that it is estimated that the user has the purchase intent on the product.

12. The support system according to claim 11, wherein
if the control unit of the information processing apparatus estimates that the purchase intent exists, the control unit generates the intent information including information capable of identifying an advertising action on the product, and
the first apparatus supports the advertising for the product on the basis of the intent information acquired from the information processing apparatus.

13. The support system according to claim 12, wherein the first apparatus supports the advertising for the product on the basis of support information indicating a relationship between the intent information acquired from the information processing apparatus and the provision information.

14. The support system according to claim 12, further comprising:
a second apparatus that manages performance information indicating sales performance on the product, wherein
the first apparatus acquires the performance information and supports the advertising for the product on the basis of the intent information and the performance information.

15. The support system according to claim 14,
if the product indicated by the intent information is sold, the second apparatus associates the intent information with the performance information, and
the first apparatus acquires the performance information associated with the intent information and supports the advertising for the product on the basis of the intent information and the performance information.

16. The support system according to claim 15, wherein
the information processing apparatus provides the intent information to a mobile electronic device of the user, and
the second apparatus acquires the intent information from the mobile electronic device, and supports sales of the product indicated by the intent information.

17. A control method implemented by an information processing apparatus including a storage unit that stores therein provision information including a provision condition for advertising for a product in a content, the control method comprising:
estimating purchase intent on the product on the basis of a reaction of a user to the advertising for the product using the content if the provision condition indicated by the provision information is met; and
associating intent information with the provision information, the intent information indicating that it is estimated that the user has the purchase intent on the product.
